# EUROPEAN PATENT SPECIFICATION

(11) **EP 4 528 469 B1**
(45) Date of publication and mention of the grant of the patent: **25.11.2026**
(21) Application number: 23899480.0
(22) Date of filing: 22.08.2023
(51) Int. Cl.: G06F 3/06, G06F 8/65

(54) **OPERATING SYSTEM UPGRADE METHOD, DEVICE, AND STORAGE MEDIUM**
BETRIEBSSYSTEMAKTUALISIERUNGSVERFAHREN, VORRICHTUNG UND SPEICHERMEDIUM
PROCÉDÉ DE MISE À NIVEAU DE SYSTÈME D'EXPLOITATION, DISPOSITIF ET SUPPORT DE STOCKAGE

(30) Priority: 05.12.2022 CN 202211549764
(43) Date of publication of application: 26.03.2025
(73) Proprietor: Honor Device Co., Ltd., Shenzhen, Guangdong 518040 (CN)
(72) Inventor: CHEN, Chao, Shenzhen, Guangdong 518040 (CN); WANG, Yanzhao, Shenzhen, Guangdong 518040 (CN); HAO, Qingtao, Shenzhen, Guangdong 518040 (CN); HUANG, Jiulin, Shenzhen, Guangdong 518040 (CN)
(74) Representative: Beder, Jens
(86) International application number: PCT/CN2023/114246
(87) International publication number: WO 2024/119895

(56) References cited:
- CN-A- 103 455 348
- CN-A- 108 595 113
- CN-A- 114 461 257
- CN-A- 114 968 297
- US-A1- 2012 054 734

## Description

This application claims priority to Chinese Patent Application CN 118 151 833 A (Application No. 202211549764.7), filed with the China National Intellectual Property Administration on December 5, 2022 and entitled "OPERATING SYSTEM UPGRADE METHOD, DEVICE, AND STORAGE MEDIUM".

### TECHNICAL FIELD

This application relates to the field of terminals, and in particular, to an operating system upgrade method, an electronic device, and a computer-readable storage medium.

### BACKGROUND

The over-the-air technology (Over-the-Air Technology, OTA) is a technology that enables remote update of an operating system version of a wireless communication device via a wireless network interface of the wireless communication device.

In a virtual A/B-OTA upgrade policy, data partitions such as System, product, version, and preload are combined into a dynamic partition (Super). The wireless communication device can adjust the size of each sub-partition (such as the foregoing System, product, version, and preload) in the dynamic partition (Super) based on requirements of a new version of an operating system to meet a requirement of expansion or size reduction of each sub-partition, without changing the size of the dynamic partition (Super).

During some version update, storage space usage of an updated dynamic partition (Super) is significantly decreased, but the storage space cannot be used to store user data, leading to a waste of storage resources.

CN 103 455 348 A discloses a subarea adjustment method. The method comprises the steps of obtaining a target subarea table version from a server; receiving an upgrade instruction which is sent by the server and used for indicating upgrade to the target subarea table version; analyzing the difference between subareas which correspond to the target subarea table version and subareas which correspond to a current subarea table version; and adjusting the subareas which correspond to the current subarea table version according to the difference.

CN 114 461 257 A discloses an operating system data configuration method. The method is applied to an electronic device, wherein after the electronic device is started, data of a basic partition, a first static partition and a dynamic partition are loaded to start a first operating system. After a first operating system is started, the method comprises the following steps: acquiring an operating system upgrade package; setting the state mark of the second static partition to be non-bootable; upgrading the data of the second static partition according to the operating system upgrade package; and when the data upgrading of the second static partition fails, setting the state mark of the second static partition to be bootable, and synchronizing the data of the first static partition to the second static partition.

### SUMMARY

This application provides an operating system upgrade method, an electronic device, and a computer-readable storage medium. The operating system upgrade method provided in this application may be applied to a wireless communication device such as a mobile phone or a tablet computer. By implementing the method, after an operating system is upgraded, an electronic device may modify sizes of a dynamic partition (Super) and a user data partition (Userdata) based on the size of an upgraded operating system, to flexibly adjust a storage capacity of the electronic device. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, this application provides an operating system upgrade method, applied to an electronic device. A memory of the electronic device includes a first partition and a second partition. The first partition is configured to store first data of a first operating system installed on the electronic device. The second partition is configured to store user data. The memory further includes a first partition table and first metadata, the first partition table is used for recording partition information of a plurality of partitions in the memory. The plurality of partitions include the first partition and the second partition. The first metadata is used for storing partition information of one or more sub-partitions in the first partition. The method includes: obtaining upgrade data, where the upgrade data includes second data of a second operating system, second metadata, and a second partition table, the second data corresponds to the first data, partition information of one or more sub-partitions in the first partition corresponding to the second data is recorded in the second metadata, and partition information of a plurality of partitions in the memory corresponding to the second operating system is recorded in the second partition table; writing the second data into the first partition; writing the second metadata to replace the first metadata; and writing the second partition table to replace the first partition table and when, for a sub-partition of the one or more sub-partitions, an actual size of storage space required for the upgrade data is smaller than a size of the sub-partition of the one or more sub- partitions, the size of the sub-partition is reduced by adjusting the size based on the actual size to release available storage space, so that a size of the first partition recorded in the second partition table is smaller than the size of the first partition recorded in the first partition table, and a size of the second partition recorded in the second partition table is greater than the size of the second partition recorded in the first partition table, and after the writing the second partition table to replace the first partition table, the size of the first partition of the memory is reduced, and the size of the second partition is increased.

By implementing the method provided in the first aspect, the electronic device may obtain a system upgrade package including system data of a new system, second metadata, and a second partition table. After the system data of the new system is written, the electronic device may use the second metadata and the second partition table in the system upgrade package to replace the current first metadata and first partition table of the electronic device, so as to adjust a memory partition of the electronic device.

According to the method provided in the first aspect, in some embodiments, the size of the first partition recorded in the second partition table is smaller than the size of the first partition recorded in the first partition table, and the size of the second partition recorded in the second partition table is greater than the size of the second partition recorded in the first partition table. After the second partition table is written to replace the first partition table, the size of the first partition of the memory is reduced, and the size of the second partition is increased.

By implementing the method provided in the foregoing embodiments, the size of a user data partition indicated by the second partition table may be greater than the size of a user data partition indicated by the current first partition table. After the first partition table is replaced with the second partition table, the user data partition of the memory of the electronic device may be increased base on indication of the second partition table, so that a user data storage capability of the electronic device is improved.

According to the method provided in the first aspect, in some embodiments, the writing the second metadata to replace the first metadata specifically includes: after writing, into the second partition, the second data stored in the first partition, writing the second metadata to replace the first metadata; and after the first metadata is replaced, writing, back into the first partition, the second data buffered in the second partition. The writing the second partition table to replace the first partition table specifically includes: after the second data buffered in the second partition is written back into the first partition, writing the second partition table to replace the first partition table.

By implementing the method provided in the foregoing embodiments, before metadata of the first partition of the memory is updated, the electronic device may uniformly transfer to the second partition the system data of the new system stored in the first partition. After the first metadata is replaced with the second metadata to implement update of the metadata of the first partition, the electronic device may migrate previously buffered system data of the new system from the second partition back to the first partition. In this way, partition information of a sub-partition in the first partition indicated by updated second metadata matches sub-partition data actually stored on the first partition.

According to the method provided in the first aspect, in some embodiments, the writing the second data into the first partition specifically includes: writing first sub-partition data in the second data into a first sub-partition in the first partition, where the first sub-partition is a sub-partition that is in the first partition and that includes a plurality of noncontiguous storage blocks, and the first sub-partition data is stored in the plurality of noncontiguous storage blocks; and the writing, into the second partition, the second data stored in the first partition specifically includes: writing the first sub-partition data, stored in a first storage block, into a third storage block of the second partition; and writing the first sub-partition data, stored in a second storage block, into a fourth storage block of the second partition, where the first storage block and the second storage block are two noncontiguous storage blocks in the first sub-partition, and the third storage block and the fourth storage block are two contiguous storage blocks in the second partition.

By implementing the method provided in the foregoing embodiments, when a sub-partition in an updated first partition is expanded into a plurality of noncontiguous storage blocks from an original contiguous storage block, the electronic device may read sub-partition data stored in the noncontiguous storage blocks successively at one time through a device mapper and write the sub-partition data into the second partition. In this way, the electronic device can integrate the non-successively stored sub-partition data into successively stored sub-partition data, and match the data with the second metadata.

According to the method provided in the first aspect, in some embodiments, the writing, into the second partition, the second data stored in the first partition specifically includes: writing the second data, stored in the first partition, into a first area of the second partition, where the first area is at the end of the second partition.

By implementing the method provided in the foregoing embodiments, writing the second data stored in the first partition into the end of the second partition is conducive to security enhancement during buffering of the second data, avoiding data loss after partition table adjustment and data loss caused by abnormal power failure during data transfer.

According to the method provided in the first aspect, in some embodiments, the writing the second metadata to replace the first metadata specifically includes: moving data in a second sub-partition in the first partition forward from a second area of the first partition forward to a third area, where the second sub-partition is a sub-partition after a third sub-partition, and the third sub-partition is a sub-partition whose size is reduced after the second data is written into the first partition; and after the data is moved forward, writing the second metadata to replace the first metadata.

By implementing the method provided in the foregoing embodiments, the electronic device may alternatively move forward data in a sub-partition after a sub-partition whose size is reduced after writing the second data, to fill available storage space. Then, the electronic device may update the metadata of the first partition to the second metadata. Partition information of a sub-partition in the first partition indicated by updated second metadata matches sub-partition data moved forward and actually stored in the first partition.

According to the method provided in the first aspect, in some embodiments, the writing the second data into the first partition specifically includes: writing the second data into the second partition in the form of a copy-on-write (COW) file to obtain third data; and writing the third data into the first partition.

According to the method provided in the first aspect, in some embodiments, before the writing the second data into the first partition, the method further includes: performing a reboot operation and during the reboot, entering a recovery mode for factory reset. The writing the second data into the first partition, writing the second metadata to replace the first metadata, and writing the second partition table to replace the first partition table are implemented in the recovery mode.

By implementing the method provided in the foregoing embodiments, the electronic device may enter the recovery mode after the reboot, and implement copy and merge operations for operating system upgrade and a partition size adjustment operation after the upgrade in the recovery mode. In addition, in the recovery mode, the electronic device may also modify vendor _country and set the vendor_country of the electronic device to vendor_country that matches a new operating system.

According to the method provided in the first aspect, in some embodiments, the first sub-partition is a dynamic partition in an Android system; and the second sub-partition is a user data partition in the Android system.

According to the method provided in the first aspect, in some embodiments, the first operating system is a demo device operating system; and the second operating system is a commercial device operating system.

During upgrade of a demo device to a commercial device, dynamic partition data of the commercial device decreases significantly, and storage space required for a corresponding dynamic partition also decreases accordingly. In this case, because the size of the dynamic partition of an upgraded commercial device operating system is reduced, the electronic device may convert, into a user data partition, storage space used as the dynamic partition before the upgrade, to expand the user data partition, so as to provide a user data storage capability of the electronic device, thereby improving user experience.

According to a second aspect, this application provides an electronic device according to claim 10.

According to a third aspect, this application provides a computer-readable storage medium, including instructions according to claim 11.

It may be understood that the electronic device provided in the second aspect, the computer storage medium provided in the third are all used for performing the method provided in this application. Therefore, for beneficial effects that can be achieved thereby, reference may be made to the beneficial effects in the corresponding method, and details are not described herein again.

### BRIEF DESCRIPTION OF DRAWINGS

FIG. 1 is a schematic diagram of memory partitions based on a virtual A/B-OTA upgrade architecture according to an embodiment of this application;
FIG. 2 is a schematic diagram of a scenario of operating system upgrade according to an embodiment of this application;
FIG. 3 is a flowchart of operating system upgrade according to an embodiment of this application;
FIG. 4A to FIG. 4D are schematic diagrams of changes of memory partitions during operating system upgrade according to an embodiment of this application;
FIG. 5 is a schematic diagram of reduction of storage space usage of a dynamic partition according to an embodiment of this application;
FIG. 6 is a flowchart of partition transfer according to an embodiment of this application;
FIG. 7A to FIG. 7B are schematic diagrams of partition transfer according to an embodiment of this application;
FIG. 8 is a schematic diagram of partition transfer including a variable partition according to an embodiment of this application;
FIG. 9 is a flowchart of another partition transfer according to an embodiment of this application;
FIG. 10 is a schematic diagram of another partition transfer in the presence of variable partitions according to an embodiment of this application;
FIG. 11 is a flowchart of another operating system upgrade according to an embodiment of this application; and
FIG. 12 is a schematic diagram of a structure of an electronic device according to an embodiment of this application.

### DESCRIPTION OF EMBODIMENTS

Terms used in the following embodiments of this application are merely intended to describe particular embodiments, and are not intended to limit this application.

A wireless communication device may be referred to as an electronic device 100. In embodiments of this application, the electronic device 100 may be a wireless communication device such as a mobile phone or a tablet computer. In other embodiments, the electronic device 100 may alternatively be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific form of the electronic device is not particularly limited in embodiments of this application.

The electronic device 100 may remotely update an operating system version based on OTA. During some version update based on virtual A/B-OTA, sizes of one or more sub-partitions of an updated dynamic partition (Super) are reduced, resulting in a decrease in storage space usage of an overall dynamic partition (Super), and leading to a waste of storage resources.

For example, using a mobile phone as an example, during conversion of a demo device (for display, not for sale) into a commercial device (for sale), a manufacturer needs to replace a demo device operating system (a first operating system) pre-installed in the mobile phone with a commercial device operating system (a second operating system). The size of a dynamic partition (Super) required by the demo device operating system is, for example, 20 GB, for storing dynamic partition data (first data) of the demo device operating system. The size of a dynamic partition (Super) required by the commercial device operating system is, for example, 10 GB, for storing dynamic partition data (second data) of the commercial device operating system.

In this case, after the upgrade to the commercial device operating system, a dynamic partition (Super) originally designed to store 20 GB dynamic partition data of the demo device operating system is now configured to store only 10 GB dynamic partition data of the commercial device operating system, which causes a significant decrease of storage space usage of the dynamic partition (Super). Because unused storage space in the dynamic partition (Super) cannot be used to store user data, the decrease in the storage space usage of the dynamic partition (Super) causes a waste of storage resources.

To avoid wasting storage resources and improve utilization of the storage resources, this application provides an operating system upgrade method. The method may be applied to a wireless communication device (that is, the electronic device 100) such as a mobile phone or a tablet computer.

By implementing the method provided in this application, during execution of operating system upgrade, when the size of upgrade data written into a sub-partition of a dynamic partition is smaller than the size of the sub-partition of the dynamic partition, the electronic device 100 reduces the size of the sub-partition of the dynamic partition based on the size of the written upgrade data, and mark storage space, in which the upgrade data is not written, in the sub-partition of the dynamic partition as available (available), thereby releasing available storage space. The available storage space is storage space marked as available.

The sub-partition, whose size is reduced, in the dynamic partition may be referred to as a target sub-partition. After all operating system upgrade data is written, the electronic device 100 may migrate (move forward) other sub-partitions after the target sub-partition forward to fill the available storage space, thereby avoiding scattered distribution of the available storage space. After migration of all sub-partitions of the dynamic partition is completed, the electronic device 100 may reduce the size of the dynamic partition and increase the size of a user data partition (Userdata).

In this way, when a requirement of an upgraded operating system for storage space of the dynamic partition (Super) is lowered, the electronic device 100 allocates to the user data partition (Userdata), storage space originally allocated to the dynamic partition (Super), so as to increase a user data storage capability of the electronic device 100, thereby improving user experience.

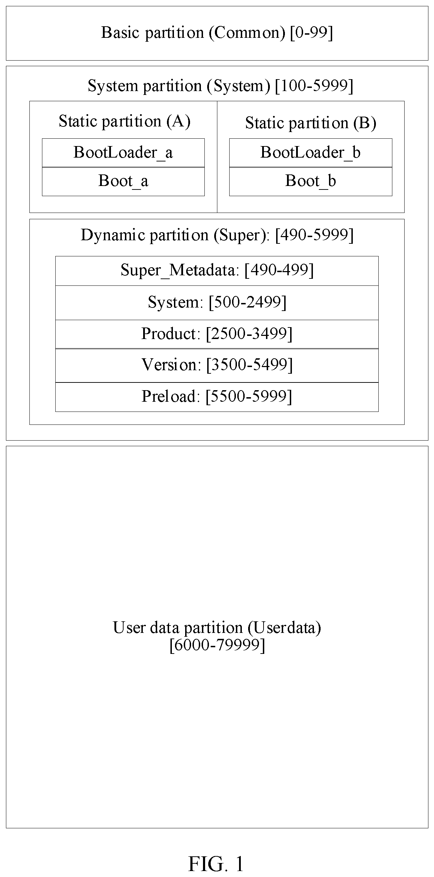

FIG. 1 is a schematic diagram of memory partitions based on a virtual A/B-OTA upgrade architecture according to an embodiment of this application.

A memory is provided in an electronic device 100. An operating system and data, such as user data, of the electronic device 100 are stored in the memory. The memory is provided with a partition table (a first partition table), used for describing a partition deployment of the memory and defining a start address and the size of each partition. Storage space corresponding to a partition is used to store only data corresponding to the partition and cannot be used to store data corresponding to another partition, that is, cannot be occupied by another partition.

As shown in FIG. 1, memory partitions of the electronic device 100 include a basic partition (Common), a system partition (System), and a user data partition (Userdata). The basic partition is configured to store system data that is not involved in operating system upgrade, such as the vendor_country (vendor_country, VC). The system partition is configured to store operating system data. Upgrading an operating system of the electronic device 100 is to upgrade data in the system partition. The user data partition is configured to store user data, for example, an APP installed by a user personally and personal data, such as a picture, a document, and a video, stored by the user personally. The system partition is used as an example. Storage space corresponding to the system partition is used to store system data only and cannot be used to store user data.

Under the virtual A/B-OTA architecture, the system partitions include a static partition (A), a static partition (B), and a dynamic partition (Super).

The static partition (A) is usually configured to store a bootloader program. A structure of the static partition (A) corresponds to a structure of the static partition (B), and the static partition (A) and the static partition (B) store corresponding system image files. Sub-partitions of the static partition (A) and the static partition (B) are distinguished from each other by suffixes _a and _b. For example, the static partition (A) includes bootloader_a, boot_a, vendor _boot_a, dtbo_a, and vbmeta_a; and the static partition (B) includes bootloader_b, boot_b, vendor_boot_b, dtbo_b, and vbmeta_b. FIG. 1 shows bootloader and boot partitions in the static partition as examples.

The dynamic partition (Super) is usually configured to store a system running program. The dynamic partition includes a plurality of sub-partitions, for example, System, Product, Version, Preload, vendor, Cust, and Odm. FIG. 1 shows System, Product, Version, and Preload partitions in the dynamic partition as examples.

For example, Table 1.1 shows an example of a first partition table used for describing the memory partitions in the memory.

**Table 1.1**

| Partition name | Base address offset | Size (storage unit) | Address range |
|---|---|---|---|
| Common | 0 | 100 | [0-99] |
| ... | ... | ... | ... |
| Super | 490 | 5900 | [490-5999] |
| Userdata | 6000 | 74000 | [6000-79999] |
| ... | ... | ... | ... |

As shown in Table 1.1, partition information of the memory partitions recorded in the first partition table includes but is not limited to: a partition name, a base address offset, and a size (partition size). An address range of a basic partition recorded in the first partition table is, for example, [0-99]. An address range of a dynamic partition in a system partition is, for example, [490-5999]. An address range of a user data partition is, for example, [6000-79999].

Metadata (Super _Metadata) is provided at the head of the dynamic partition (Super). Super _Metadata is also referred to as first metadata. Super_Metadata may be used for recording partition information of a sub-partition in the dynamic partition (Super).

For example, the partition information in the dynamic partition (Super) recorded in Super _Metadata may be shown in the following table (Table 1.2).

**Table 1.2**

| Sub-partition name | Base address offset | Size (storage unit) | Address range |
|---|---|---|---|
| Super _Metadata | 490 | 10 | [490-499] |
| System | 500 | 2000 | [500-2499] |
| Product | 2500 | 1000 | [2500-3499] |
| Version | 3500 | 2000 | [3500-5499] |
| Preload | 5500 | 500 | [5500-5999] |
| ... | ... | ... | ... |

With reference to Table 1.2, a base address offset of a System sub-partition in the dynamic partition (Super) on the memory is 500, and the size of the System sub-partition in the dynamic partition (Super) on the memory is 2000 (storage units). In other words, the 500^{th} to 2499^{th} storage units (a total of 2000 storage units) on the memory are the System sub-partition. By analogy, the 2500^{th} to 3499^{th} storage units on the memory are a Product sub-partition; the 3500^{th} to 5499^{th} storage units are a Version sub-partition; and the 5500^{th} to 5999^{th} storage units are a Preload sub-partition, and so on. The dynamic partition (Super) further includes other sub-partitions, for example, vendor, Cust, and Odm. The dynamic partition (Super) further includes available storage space for expanding the foregoing sub-partitions and the like. Examples are not listed herein.

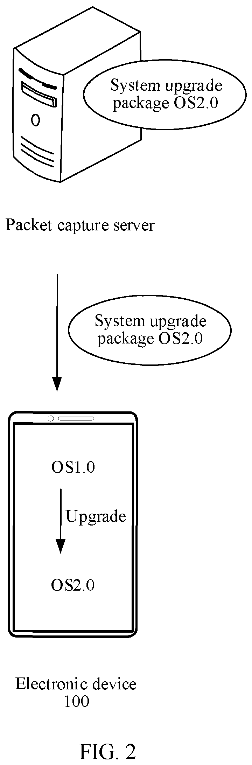

FIG. 2 is a schematic diagram of a scenario of operating system upgrade according to an embodiment of this application. As shown in FIG. 2, for example, an operating system currently used by an electronic device 100 is OS1.0 (for example, a demo device operating system).

The electronic device 100 may send a package search request to a packet capture server to obtain an operating system upgrade package from the packet capture server. The packet capture server may store a plurality of operating system data packets. The package search request may include a version number of the operating system currently used by the electronic device 100, such as OS1.0. In response to the package search request of the electronic device 100, the packet capture server may determine a system upgrade package that matches the electronic device 100, such as a data packet of an operating system OS2.0 (for example, a commercial device operating system). OS2.0 is also referred to as a target operating system. The packet capture server may return a download address of the system upgrade package to the electronic device 100. The electronic device 100 downloads a system upgrade package OS2.0 based on the download address returned by the packet capture server.

After obtaining the operating system upgrade package, the electronic device 100 performs an operating system upgrade operation. The electronic device 100 may upgrade the operating system from OS1.0 to OS2.0.

In this embodiment of this application, when the electronic device 100 writes dynamic partition data of the operating system OS2.0 into a dynamic partition (that is, upgrades dynamic partition data), the electronic device 100 checks storage space usage of the dynamic partition (Super). When the storage space usage of the dynamic partition (Super) decreases, that is, large available storage space is generated, the electronic device 100 reduces the size of the dynamic partition (Super) and expand the size of a user data partition (Userdata), to increase a user data storage capability of the electronic device 100, thereby improving user experience.

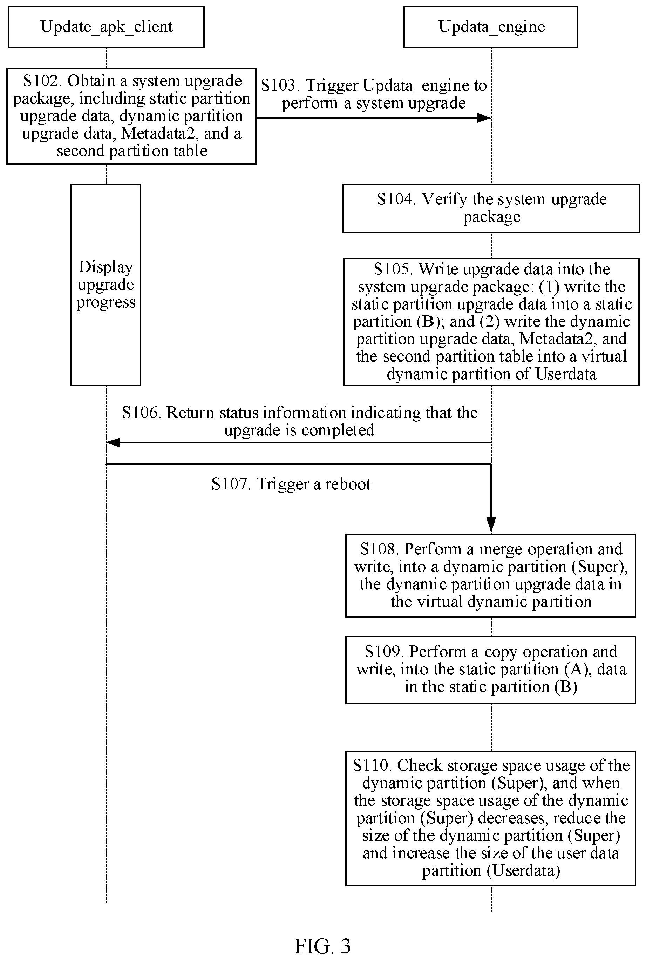

FIG. 3 is a flowchart of operating system upgrade according to an embodiment of this application.

### S102. Obtain a system upgrade package, including static partition upgrade data, dynamic partition upgrade data, Metadata2, and a second partition table.

An electronic device 100 obtains an operating system upgrade package by using a system update agent module (Update_apk_client). Update_apk_client is a tool pre-installed in the electronic device 100 for obtaining system image data (for example, OS2.0 image data) from a remote image source (for example, a packet capture server).

Update_apk_client may periodically initiate a package search request to the packet capture server. Alternatively, Update_apk_client may initiate a package search request based on a user operation. Refer to the description of FIG. 2. The package search request may include a version number, such as OS1.0, of the operating system currently running on the electronic device 100. The packet capture server may determine, based on the version number of the operating system in the package search request, such as OS2.0, a system upgrade package that matches the electronic device. Subsequently, the electronic device 100 may download a system upgrade package OS2.0 based on a download address, returned by the packet capture server, of the system upgrade package OS2.0.

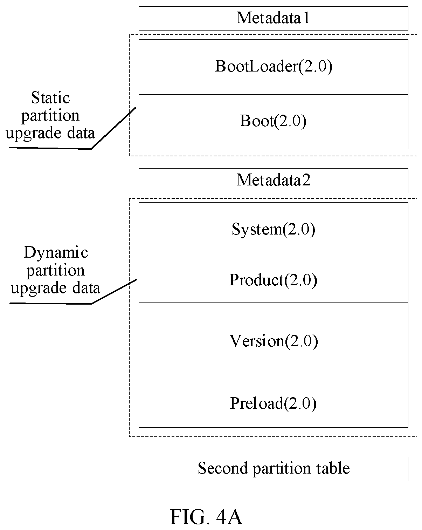

FIG. 4A is a schematic diagram of a data structure of the system upgrade package OS2.0 according to an embodiment of this application.

Refer to FIG. 4A. The system upgrade package includes static partition metadata (Metadata1), static partition upgrade data, dynamic partition metadata (Metadata2), and dynamic partition upgrade data. The static partition upgrade data (that is, static partition data of OS2.0) is used for upgrading a static partition of the electronic device 100. The dynamic partition upgrade data (that is, dynamic partition data of OS2.0) is used for upgrading a dynamic partition (Super) of the electronic device 100. The dynamic partition upgrade data is also referred to as second data. The static partition metadata (Metadata1) is used for recording partition information of a static partition of OS2.0. The dynamic partition metadata (Metadata2) is used for recording partition information of a dynamic partition of OS2.0.

For example, the partition information of the static partition recorded in Metadata1 may be shown in Table 2.1. The partition information of the dynamic partition recorded in Metadata2 may be shown in Table 2.2. Metadata2 may be referred to as second metadata.

**Table 2.1**

| Sub-partition name | Base address offset | Size (storage unit) | Address range |
|---|---|---|---|
| Metadata 1 | 490 | 10 | [490-499] |
| BootLoader | 470 | 10 | [470-479] |
| Boot | 480 | 10 | [480-489] |
| ... | ... | ... | ... |

The static partition upgrade data may include upgrade data of sub-partitions such as a BootLoader sub-partition and a Boot sub-partition. The size of the BootLoader sub-partition may be 10. The size of 10 of the BootLoader sub-partition may indicate that upgrade data stored in the BootLoader sub-partition requires 10 storage units for storage. Similarly, the size of the Boot partition may be 10 or the like. Examples are not listed herein.

Data in the BootLoader sub-partition in the system upgrade package may be used for upgrading the BootLoader sub-partition of the static partition of the electronic device 100. Data in the Boot sub-partition in the system upgrade package may be used for upgrading the Boot sub-partition of the static partition of the electronic device 100.

**Table 2.2**

| Sub-partition name | Base address offset | Size (storage unit) | Address range |
|---|---|---|---|
| Metadata2 | 490 | 10 | [490-499] |
| System | 500 | 2000 | [500-2499] |
| Product | 2500 | 1000 | [2500-3499] |
| Version | 3500 | 500 | [3500-3999] |
| Preload | 4000 | 500 | [4000-4499] |
| ... | ... | ... | ... |

The dynamic partition upgrade data may include upgrade data of sub-partitions such as System, Product, Version, and Preload.

Data in the System sub-partition in the system upgrade package is used for upgrading the System sub-partition of the dynamic partition (Super) of the electronic device 100. Data in the Product sub-partition in the system upgrade package is used for upgrading the Product sub-partition of the dynamic partition (Super) of the electronic device 100. Data in the Version sub-partition in the system upgrade package may be used for upgrading the Version sub-partition of the dynamic partition (Super) of the electronic device 100. Data in the Preload sub-partition in the system upgrade package may be used for upgrading the Preload sub-partition of the dynamic partition (Super) of the electronic device 100, and so on.

In this embodiment of this application, the system upgrade package OS2.0 further includes a partition table (a second partition table) corresponding to a target operating system, used for updating a partition deployment of the memory after the system upgrade.

Table 3 shows an example of memory partition information recorded in the second partition table.

**Table 3**

| Partition name | Base address offset | Size (storage unit) | Address range |
|---|---|---|---|
| Common | 0 | 100 | [0-99] |
| ... | ... | ... | ... |
| Super | 490 | 4010 | [490-4499] |
| Userdata | 4500 | 75500 | [4500-79999] |
| ... | ... | ... | ... |

Storage space required for the dynamic partition data of the target operating system OS2.0 is reduced. In this case, the size of the dynamic partition recorded in the second partition table may be reduced accordingly. As shown in Table 3, an address range of Super recorded in the second partition table may be [490-4499]. In this case, the size of Userdata may be increased. For example, an address range of Userdata is, for example, [4500-79999].

In some embodiments, an address range of each sub-partition in the static partition may be recorded in the second partition table. Therefore, Metadata1 is optional. To be specific, system upgrade may include only Metadata2 and the second partition table.

### S103. Trigger Updata_engine to perform system upgrade.

### S104. Verify a system upgrade package.

An upgrade module (Updata _engine) is a functional module that is pre-installed in the electronic device 100 and that stores system upgrade processing logic, and may be configured to perform a system upgrade operation. After obtaining the system upgrade package, first, Updata_engine may verify the system upgrade package. Specifically, verifying the system upgrade package includes verifying whether a digital signature of the system upgrade package is valid.

### S105. Write upgrade data into the system upgrade package: (1) write the static partition upgrade data into a static partition (B); and (2) write the dynamic partition upgrade data, Metadata2, and the second partition table into a virtual dynamic partition of Userdata.

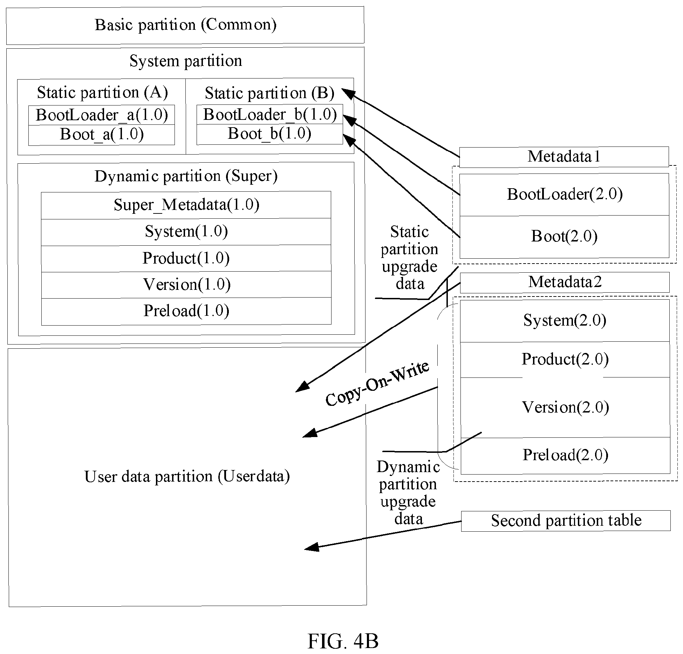

The electronic device 100 may boot from a static partition. Refer to FIG. 4B. The electronic device 100 may boot from a static partition (A). A basic partition (Common), the static partition (A), and a dynamic partition (Super) are loaded in sequence, and work on a currently installed operating system, such as a demo device operating system OS1.0.

After the system upgrade package is verified, Updata_engine uses operating system upgrade data (the static partition upgrade data and the dynamic partition upgrade data) in the system upgrade package to upgrade a system partition.

### (1) Write the static partition upgrade data into a static partition (B):

In a scenario in which an operating system of the electronic device 100 is upgraded by using a virtual A/B-OTA upgrade architecture, when the electronic device 100 boots from the static partition (A), Updata_engine writes the static partition upgrade data in the system upgrade package into the static partition (B). As shown in FIG. 4B, the electronic device 100 may write, into a bootloader _b sub-partition in the static partition (B) of the electronic device 100, data in the bootloader sub-partition in the system upgrade package. The electronic device 100 may write, into a boot_b sub-partition in the static partition (B) of the electronic device 100, data in the boot sub-partition in the system upgrade package.

There is a possibility of write failure during a write operation. When a write failure occurs, Updata _engine interrupts the entire operating system upgrade operation, outputs an upgrade failure prompt to a user (for example, a dialog box for displaying an upgrade failure), and automatically re-upgrades or the user determines whether to retry the upgrade or cancel the upgrade.

Updata_engine may perform data verification on the static partition (B) after the write operation is performed, to determine whether the static partition upgrade data is successfully written into the static partition (B). For example, in a scenario of upgrading from OS1.0 to OS2.0, the system upgrade package may include static partition upgrade data of OS2.0 and a hash value of the static partition upgrade data of OS2.0. After the write operation is performed, Updata_engine may calculate a hash value of the data in the static partition (B), and determine whether the hash value of the data in the static partition (B) is consistent with the hash value of the static partition upgrade data of OS2.0 recorded in the system upgrade package. If the hash value of the data in the static partition (B) is consistent with the hash value of the static partition upgrade data of OS2.0 recorded in the system upgrade package, it indicates that the write is successful, and Updata_engine may perform subsequent operating system upgrade operations. If the hash value of the data in the static partition (B) is not consistent with the hash value of the static partition upgrade data of OS2.0 recorded in the system upgrade package, it indicates that the data write fails, and the upgrade fails.

Updata_engine may write, into a corresponding sub-partition in the static partition (B), upgrade data of each sub-partition in the static partition included in the system upgrade package based on the writing and verifying operations described above, and verify whether the writing is correct. If the system upgrade package does not include upgrade data of a sub-partition of a static partition, Updata_engine may synchronize data of a corresponding sub-partition in the static partition (A) to the sub-partition in the static partition (B). During the upgrade process, if an upgrade error occurs in a sub-partition, Updata_engine interrupts the upgrade operation, and the upgrade fails. When all sub-partitions are upgraded successfully, Updata_engine may determine that the static partition is upgraded successfully, and may perform subsequent steps.

Further, when upgrade of a static partition fails, the data in the static partition cannot be used to successfully boot the operating system. In this case, to avoid an operating system boot error caused by loading the static partition that fails to be upgraded during the operating system boot process, the static partition may carry a status flag: bootable or unbootable. Before loading the static partition data, the electronic device 100 may first read the status flag of the static partition. The electronic device 100 loads the static partition data only when the status flag of the static partition is bootable. Specifically, the status flag of the static partition may be stored in metadata (/metadata) in the Common partition.

For example, before upgrading the static partition (B), Updata_engine may mark the static partition (B) as unbootable, and after the static partition (B) is upgraded successfully, Updata_engine may mark the static partition as bootable. In this way, if the upgrade of the static partition (B) fails, the state of the static partition (B) remains unbootable. In this case, the electronic device 100 does not load the data of the static partition that fails to be upgraded.

When the system upgrade includes Metadata1, Updata_engine may write Metadata1 in the system upgrade package into the static partition.

### (2) Write the dynamic partition upgrade data, Metadata2, and the second partition table into a virtual dynamic partition of Userdata:

Updata_engine may create a virtual dynamic partition in the user data partition (Userdata), and write, into the virtual dynamic partition, the dynamic partition upgrade data, Metadata2, and the second partition table in the system upgrade package. Specifically, in the virtual dynamic partition, the electronic device 100 may use a copy-on-write (Copy-On-Write, COW) file to store the dynamic partition upgrade data. The dynamic partition upgrade data stored in the COW file may be referred to as third data.

The electronic device 100 may use an incremental upgrade method to write the dynamic partition upgrade data into the virtual dynamic partition. During the system upgrade process, for compatibility reasons, in most cases, data of a dynamic partition of an old version system (such as OS1.0) and data of a dynamic partition of a new version system (such as OS2.0) overlap. In other words, a part of the data is the same. The electronic device 100 may determine dynamic partition data (that is, incremental data) that is included in the new version system but not included in the old version system, and write the incremental data into the virtual dynamic partition in the form of a COW file. For example, a System sub-partition of OS1.0 includes files X1 and X2, and a System sub-partition of OS2.0 includes files X1, X2, and X3. In this case, the file X3 is dynamic partition upgrade data (also referred to as incremental data) included in the new version system (2.0) but not included in the old version system (1.0). When using the incremental upgrade method, the electronic device 100 may write only the file X3 into the virtual dynamic partition in the form of a COW file.

Optionally, the electronic device 100 may alternatively use a full upgrade method to write the dynamic partition upgrade data. The electronic device 100 may write all dynamic partition upgrade data of the new version system into the virtual dynamic partition. In the foregoing example, the electronic device 100 may write, into the virtual dynamic partition, the files X1, X2, and X3 in the System sub-partition of OS2.0 in the form of a COW file.

After the COW file is successfully written to the virtual dynamic partition in Userdata, Updata_engine may change merge status information in the metadata partition (/metadata) of the basic partition (Common) from "merged (merged)" to "wait for merge (wait for merge)". The merge status information indicates whether a COW file that needs to be merged to the dynamic partition (Super) exists currently. The merge status information includes an overall identifier for the dynamic partition (Super) and a sub-partition identifier for each sub-partition. If the overall identifier is "merged (merged)", it indicates that all sub-partitions of the dynamic partition (Super) do not need to be merged. If the overall identifier "wait for merge (wait for merge)", it indicates that one or more sub-partitions of the dynamic partition (Super) need to be merged. If an identifier of a sub-partition is "merged (merged)", it indicates that the sub-partition does not need to be merged. If an identifier of a sub-partition is "wait for merge (wait for merge)", it indicates that the sub-partition needs to be merged.

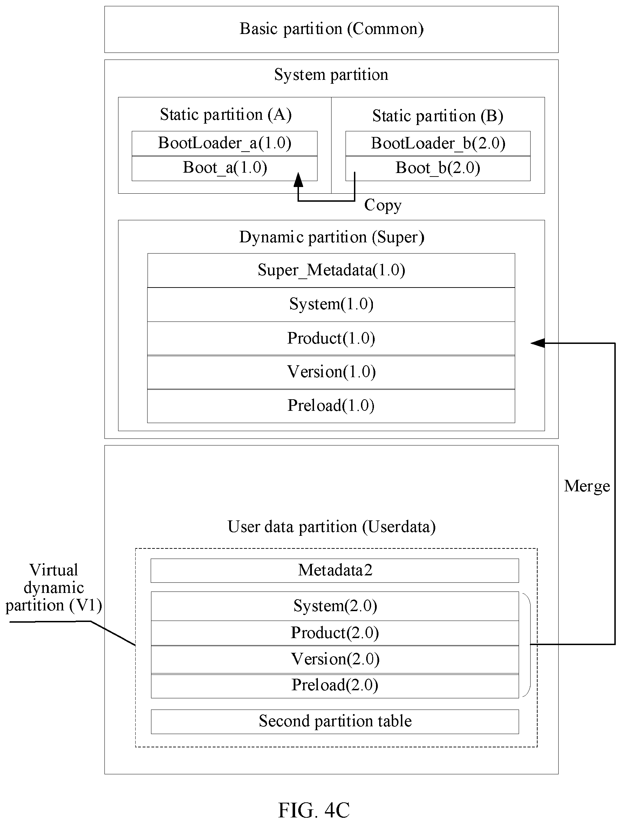

FIG. 4C is a schematic diagram of memory partitions after operating system upgrade data is written. As shown in FIG. 4C, the static partition (B) stores static partition data of the new operating system OS2.0. The user data partition (Userdata) may include a virtual dynamic partition (V1). The virtual dynamic partition (V1) stores the dynamic partition (Super) data (third data) of the target operating system OS2.0 saved in the form of a COW file. The virtual dynamic partition (V1) also includes sub-partitions such as System, Product, Version, and Preload. The foregoing sub-partitions such as System, Product, Version, and Preload respectively store corresponding dynamic partition (Super) sub-partition data (a COW file) of the new operating system OS2.0.

### S106. Return status information indicating that the upgrade is completed.

When Updata_engine executes the upgrade operations shown in S104 to S105, Update_apk_client may monitor the progress of the upgrade operations shown in S104 to S106. The electronic device 100 may display a corresponding progress control based on the progress detected by Update _apk_client, to show the upgrade progress to the user.

After writing the upgrade data in the system upgrade package, that is, after executing steps S104 and S105, Updata_engine may return, to Update_apk_client, the status information indicating that the upgrade is completed. Accordingly, the progress control may indicate to the user that the upgrade is completed.

### S107. Trigger a reboot.

Upon receipt of the status information indicating that the upgrade is completed returned by Updata_engine, Update_apk_client may trigger a reboot. In this embodiment of this application, preferably, after the reboot is triggered, the electronic device 100 may automatically start a reboot program. In some other embodiments, the electronic device 100 may alternatively determine, based on a user operation, whether to reboot immediately. For example, the electronic device 100 may display a pop-up window on a screen to prompt the user to choose to reboot immediately or reboot later. If the user chooses to reboot later, further, the user may specify reboot time, such as 24 o'clock on the same day. When the reboot time specified by the user arrives, the electronic device 100 may start the reboot program to perform a reboot operation.

During reboot of the electronic device 100, the electronic device may boot from the static partition (B) and run an updated operating system, that is, the target operating system OS2.0. The status flag "bootable" of the static partition (B) recorded in the Common partition may indicate that the electronic device 100 boots from the static partition (B). The merge status information "wait for merge" in the metadata (/metadata) in the Common partition may indicate that the electronic device 100 loads the dynamic partition (Super) and the virtual dynamic partition together through snapshot after loading the static partition (B).

In the upgrade method shown in FIG. 3, the reboot shown in S107 is executed, and the electronic device 100 may be rebooted to enter an Android mode. In the Android mode, the user may use the electronic device 100 to make calls, take photos, browse web pages, watch videos, and the like.

### S108. Perform a merge operation and write, into the dynamic partition (Super), the dynamic partition upgrade data in the virtual dynamic partition.

Refer to the description of S 105. After writing the dynamic partition upgrade data to the virtual dynamic partition of the user data partition (Userdata), Updata_engine may change the merge status information in the metadata partition (/metadata) of the basic partition (Common) from "merged (merged)" to "wait for merge (wait for merge)", indicating that there is currently a COW file that needs to be written to the dynamic partition (Super).

After the reboot, Updata_engine may determine, based on the merge status information "wait for merge (wait for merge)" and perform the merge (merge) operation. In this embodiment of this application, the merge operation means that during the operating system upgrade process, the dynamic partition (Super) upgrade data saved in the form of a COW file in the virtual dynamic partition on the user data partition (Userdata) is written into the dynamic partition (Super), so that a data upgrade operation performed on the dynamic partition (Super) is completed. During reboot after the merge is completed, the electronic device 100 only needs to load the dynamic partition (Super) to complete the device boot without loading the dynamic partition (Super) and the virtual dynamic partition.

Specifically, Updata_engine may write a COW file of each sub-partition in the virtual dynamic partition into a corresponding sub-partition in the dynamic partition (Super), so that data of each sub-partition in the dynamic partition (Super) is updated to system data of the new operating system OS2.0.

Refer to FIG. 4C. The electronic device 100 may write upgrade data (second data) in the System sub-partition in the virtual dynamic partition (V1) into the System sub-partition in the dynamic partition (Super). Similarly, the electronic device 100 may write, into the Product, Version, and Preload sub-partitions in the dynamic partition (Super) in sequence, upgrade data in the Product, Version, and Preload sub-partitions in the virtual dynamic partition (V1).

After writing a COW file of the virtual dynamic partition into a corresponding address in the dynamic partition (Super), Updata_engine may delete a COW file in the user data partition (Userdata) and return a corresponding storage space to the user data partition (Userdata). In addition, Updata_engine may change the merge status information in the metadata (/metadata) of the basic partition (Common) from "wait for merge (wait for merge)" to "merged (merged)".

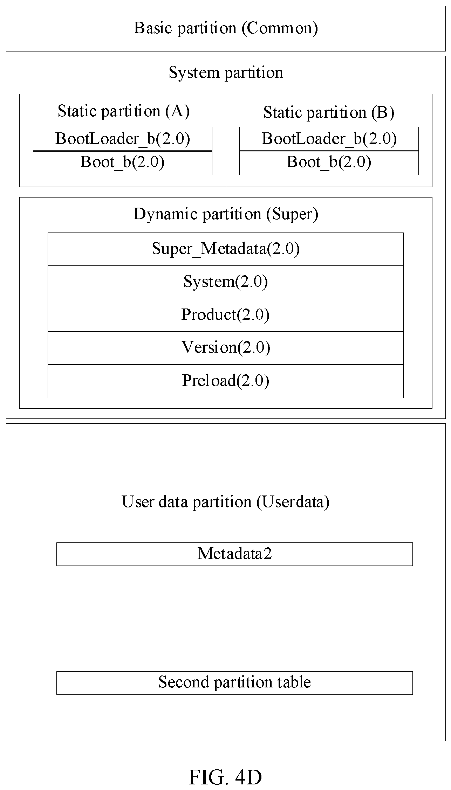

After writing the upgrade data, the electronic device 100 updates partition information of each sub-partition recorded in Super _Metadata based on the size of each sub-partition in which the data is written. For example, in FIG. 4D, after the merge operation is performed, the Super_Metadata recording the partition information of the sub-partition in the dynamic partition may be updated from Super _Metadata (1.0) corresponding to OS1.0 to Super _Metadata (2.0) corresponding to OS2.0.

### S109. Perform a copy operation and write, into the static partition (A), data in the static partition (B).

Refer to FIG. 4C. Updata_engine may write, into a corresponding sub-partition of the static partition (A) in sequence, data of each sub-partition in the static partition (B) based on addresses corresponding to sub-partitions in the static partition (A) and the static partition (B), and data synchronization of the static partition (A) and the static partition (B) is completed.

In S108, the merge operation is performed on operating system data in the dynamic partition (Super), and does not affect the operating system data in the virtual dynamic partition currently used for boot. In S109, the copy operation is performed on the operating system data in the static partition (A) and does not affect the operating system data in the static partition (B) currently used for boot. Therefore, the user can use the device normally during the entire operating system upgrade process.

FIG. 4D is a schematic diagram of memory partitions after an operating system is upgraded. In this case, the system data of the new version OS2.0 is stored in the dynamic partition (Super). Super_Metadata records partition information of each sub-partition of a new version operating system. Thereafter, the electronic device 100 may run the new operating system OS2.0 during each boot.

In this case, as shown in FIG. 4D, the user data partition (Userdata) of the memory further includes Metadata2 and the second partition table. Metadata2 and the second partition table is used to subsequently adjust the size of the dynamic partition (Super) and the size of the user data partition (Userdata).

### S110. Check storage space usage of the dynamic partition (Super), where when the storage space usage of the dynamic partition (Super) decreases, the size of the dynamic partition (Super) is reduced, and the size of the user data partition (Userdata) is increased.

During some upgrade processes, such as upgrading from a demo device operating system to a commercial device operating system, the storage space usage of the dynamic partition (Super) is reduced significantly.

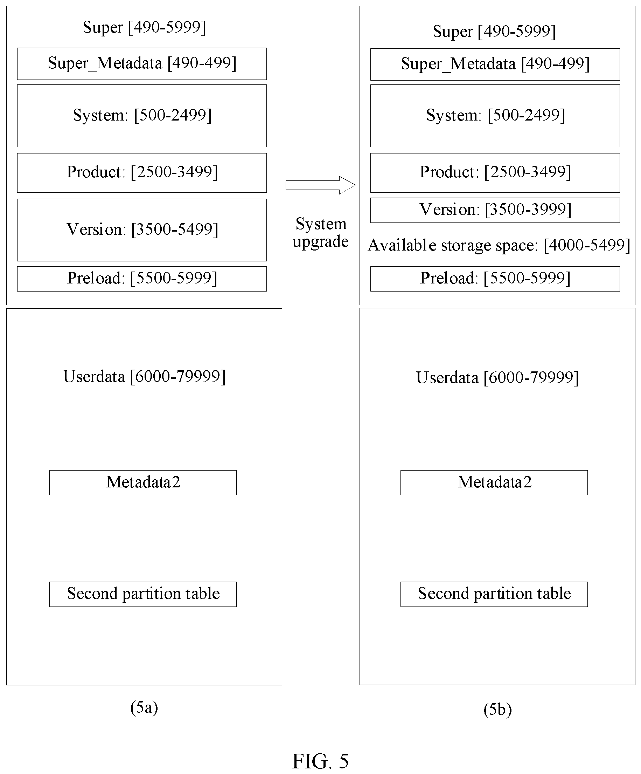

FIG. 5 is a schematic diagram of reduction of storage space usage of a dynamic partition (Super) according to an embodiment of this application. (5a) of FIG. 5 shows an example of address ranges of the memory partitions and sub-partitions of the memory partitions of the electronic device 100 before upgrade. Refer to (5a) of FIG. 5. The address range of the dynamic partition (Super) of the electronic device 100 may be [490-5999], and the address range of the user data partition (Userdata) may be [6000-79999].

The Dynamic partition (Super) may include sub-partitions such as System, Product, Version, and Preload, used for storing system data of corresponding categories. Refer to Table 1.2. For example, the address ranges of the sub-partitions System, Product, Version, and Preload in the dynamic partition (Super) may be [500-2499], [2500-3499], [3500-5499], and [5500-5999] in sequence. Details are not described here. The partition information of each sub-partition in the dynamic partition (Super) is stored in Super _Metadata in the head of the dynamic partition (Super).

In the process of writing the dynamic partition upgrade data shown in FIG. 4C, the electronic device 100 may write, into a sub-partition corresponding to the dynamic partition (Super), upgrade data in a sub-partition in the virtual dynamic partition (V1). For example, the upgrade data in the System sub-partition in the virtual dynamic partition (V1) is written into the System sub-partition in the dynamic partition (Super).

For some sub-partitions, the size of storage space required for upgrade data is equal to the size of the sub-partition. In this case, the size of the sub-partition does not need to be changed. For some other sub-partitions, the size of storage space required for upgrade data is larger than the size of the sub-partition. In this case, the sub-partition needs to request the dynamic partition (Super) for a reserved storage space for expansion or available storage space released by another sub-partition, for storing overflowed upgrade data. For some other sub-partitions, the size of storage space required for upgrade data is smaller than the size of the sub-partition. In this case, the electronic device 100 may reduce the size of the sub-partition.

With reference to Metadata2 of the dynamic partition upgrade data in the system upgrade package shown in Table 2.2, that upgrade data of the System sub-partition requires 2000 storage units is consistent with the size of the current System sub-partition of the electronic device 100. In this case, after the upgrade, the size of the System sub-partition does not need to be changed. That upgrade data of the Product sub-partition requires 1000 storage units is consistent with the size of the current Product sub-partition of the electronic device 100. That upgrade data of the Preload sub-partition requires 500 storage units is consistent with the size of the current Preload sub-partition of the electronic device 100. Therefore, after the upgrade, the size of the Product sub-partition and the size of the Preload sub-partition do not need to be changed.

Upgrade data of the Version sub-partition requires 500 storage units. However, that the size of the current Version sub-partition of the electronic device 100 is 2000 is much larger than the storage units required for upgrade data. In this case, the electronic device 100 may reduce the size of the Version sub-partition by 500. Refer to (5b) of FIG. 5. An address range of the Version sub-partition after size reduction is [3500-3999]. In addition, the electronic device 100 may release storage space [4000-5499] (that is, available storage space) in the original Version sub-partition in which the upgrade data is not written.

When another sub-partition needs to be expanded, the dynamic partition (Super) may allocate the available storage space to a sub-partition that needs to be expanded. When another sub-partition does not need to be expanded, or a total amount of expanded storage space is less than a total amount of the available storage space, the storage space usage of the dynamic partition (Super) decreases. In this case, the available storage space in the dynamic partition (Super) is idle for a long time, resulting in a waste of storage resources.

To avoid the waste of storage resources, after executing S109, Updata_engine checks the storage space usage of the dynamic partition (Super). When the storage space usage of the dynamic partition (Super) decreases, that is, when available storage space is generated, Updata_engine performs partition transfer on one or more sub-partitions in the dynamic partition (Super), to fill available storage space between the sub-partitions, thereby reducing the size of the dynamic partition (Super) and expanding the size of the user data partition (Userdata).

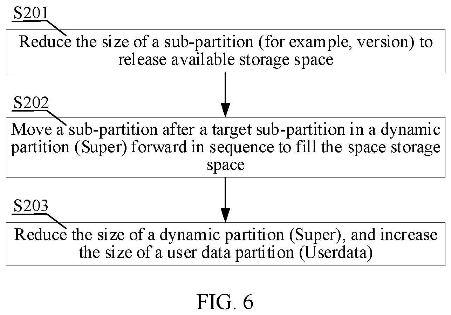

FIG. 6 is a flowchart of partition transfer according to an embodiment of this application.

S201. Reduce the size of a sub-partition (for example, version) and release available storage space.

Refer to the description of FIG. 5. When performing the merge operation, after each time upgrade data of a sub-partition is written, the electronic device 100 adjusts the size of the sub-partition based on an actual size of the upgrade data written into the sub-partition. When the actual size of the upgrade data written into a sub- partition is smaller than the size of the sub-partition, the electronic device 100 reduces the size of the sub-partition and release storage space in the sub-partition in which the upgrade data is not written, with reference to the Version sub-partition shown in FIG. 5.

Based on the size of upgrade data of each sub-partition of the dynamic partition in the system upgrade package, after the merge operation is performed, there may be one or more sub-partitions whose sizes are reduced in the dynamic partition (Super). Therefore, one or more available storage space. Here, an example in which the size of one sub-partition is reduced, and one available storage space is generated is first used in an embodiment of this application to describe the method flow of partition transfer provided in this embodiment of this application.

Super _Metadata of the dynamic partition (Super) is used for recording partition information of the dynamic partition (Super). After reducing the size of the sub-partition, the electronic device 100 may accordingly update partition information of each sub-partition recorded in the Super_Metadata sub-partition. For example, the partition information of the dynamic partition (Super) recorded in Super_Metadata may be updated from Table 1.2 to Table 4, corresponding to (5b) of FIG. 5.

**Table 4**

| Partition name | Base address | Size (storage unit) | Address range |
|---|---|---|---|
| System | 500 | 2000 | [500-2499] |
| Product | 2500 | 1000 | [2500-3499] |
| Version | 3500 | 500 | [3500-3999] |
| Available storage space | 4000 | 1500 | [4000-5499] |
| Preload | 5500 | 500 | [5500-5999] |
| ... | ... | ... | ... |

For example, after the Version sub-partition is reduced to [3500-3999], the size of the version sub-partition recorded in the Super _Metadata sub-partition may be updated to 500 accordingly, and an address range may be updated to [3500-3999] accordingly. The storage space [4000-5499] released from the original Version sub-partition may be marked as available storage space for expansion of other sub-partitions. When there is no expansion demand, the available storage space remains idle.

S202. Move a sub-partition after a target sub-partition in the dynamic partition (Super) forward in sequence to fill the space storage space.

A sub-partition of the dynamic partition whose size is reduced may be referred to as the target sub-partition (that is, a third sub-partition), for example, the foregoing Version sub-partition. A sub-partition after the target sub-partition may be referred to as a to-be-migrated sub-partition (that is, a second sub-partition), for example, the foregoing Preload sub-partition. The electronic device 100 may determine a new address range of the to-be-migrated sub-partition based on a tail address of a reduced target sub-partition and the size of the to-be-migrated sub-partition.

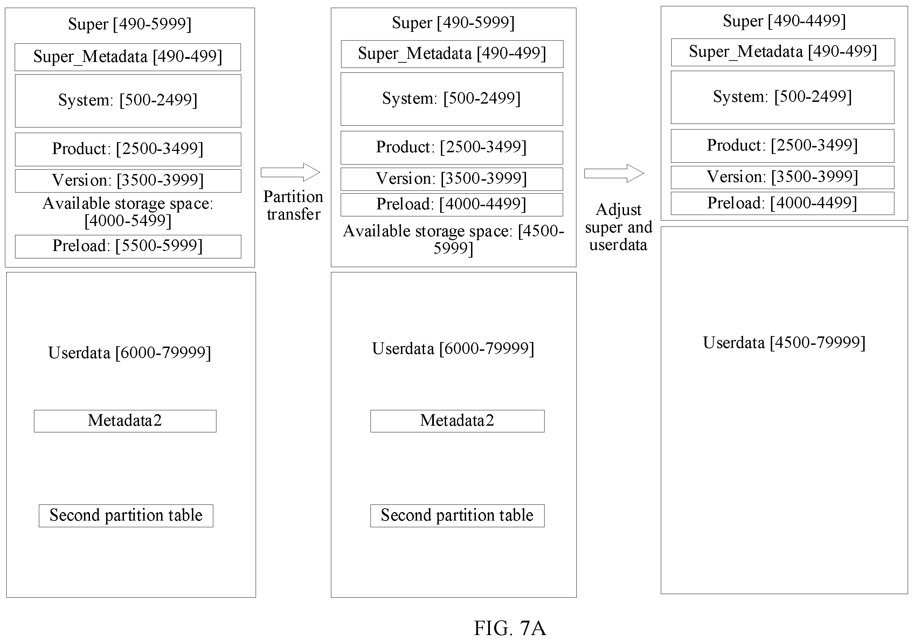

FIG. 7A is a schematic diagram of partition transfer according to an embodiment of this application. As shown in FIG. 7A, a Version sub-partition is a target sub-partition, and a Preload sub-partition after the Version sub-partition is a to-be-migrated sub-partition.

First, based on the address range [3500-3999] of the Version sub-partition after size reduction, the electronic device 100 may determine that a tail address of the Version sub-partition is 3999, that is, determine that a base address range of the next sub-partition (Preload) is 3000. According to the size 500 of the Preload sub-partition, the electronic device 100 may determine that the target address range of the Preload sub-partition is [4000-4499]. Therefore, the electronic device 100 may migrate, to [4000-4499], data of the Preload sub-partition stored in [5500-5999], and release the storage space [5500-5999] of the Preload sub-partition before the migration.

Similarly, after performing partition transfer operation, the electronic device 100 may update partition information of each sub-partition recorded in the Super _Metadata sub-partition accordingly. For example, the partition information of the dynamic partition (Super) recorded in Super _Metadata may be updated from Table 4 to Table 5.

**Table 5**

| Partition name | Base address | Size (storage unit) | Address range |
|---|---|---|---|
| System | 500 | 2000 | [500-2499] |
| Product | 2500 | 1000 | [2500-3499] |
| Version | 3500 | 500 | [3500-3999] |
| Preload | 4000 | 500 | [4000-4499] |
| Available storage space | 4500 | 1500 | [4500-5999] |
| ... | ... | ... | ... |

Optionally, after moving the to-be-migrated sub-partition forward to the target storage space, the electronic device 100 may use Metadata2 to directly write Super _Metadata of the current dynamic partition, to update the partition information of the sub-partition recorded in the current Super _Metadata without having to separately and specifically modify the partition information of the to-be-migrated sub-partition in Super _Metadata.

S203. Reduce the size of the dynamic partition (Super) and increase the size of user data partition (Userdata).

Refer to Table 5 or FIG. 7A. After the to-be-migrated sub-partition is migrated forward, all available storage space generated due to the size reduction of the sub-partition is migrated to the tail of the dynamic partition (Super). In this case, the electronic device 100 reduces the size of the dynamic partition (Super) and increase the size of the user data partition (Userdata).

Specifically, the electronic device 100 may determine a tail address of the last sub-partition after the transfer as a tail address of the dynamic partition (Super), and set an address of the next storage unit after the tail address (that is, a base address of the available storage space) as a base address of the user data partition (Userdata).

Refer to Table 5 or FIG. 7A. The electronic device 100 may determine that a tail address of the last sub-partition Preload is 4499 and an address of the next storage unit of the tail address of Preload is 4500. Therefore, the electronic device 100 may update the last address of the dynamic partition (Super) to 4499 and update the base address of the user data partition (Userdata) to 4500. At this time, the size of the storage space corresponding to the dynamic partition (Super) is reduced from the original [490-5999] to [490-4499]. Accordingly, the storage space corresponding to the user data partition (Userdata) is expanded from the original [6000-79999] to [4500-79999].

Optionally, the electronic device 100 may use, by using a partition table in the system upgrade package (that is, a second partition table, such as Table 3), partition information recorded in the second partition to update a memory partition table (that is, a first partition table), thereby reducing the size of the dynamic partition (Super) and increasing the size of the user data partition (Userdata), without having to separately and specifically modify the partition information of Super and Userdata.

After using Metadata2 to update current Super _Metadata of the electronic device 100 and using the second partition table to update the memory partition table (that is, the first partition table), the electronic device 100 may clean Metadata2 and the second partition table buffered in Userdata.

By implementing the partition transfer method described in the foregoing embodiment, the electronic device 100 allocates available storage space in an upgraded dynamic partition (Super) to the user data partition (Userdata), to increase the size of the user data partition (Userdata), so as to increase a user data storage capability of the electronic device 100 and allow the user to store more user data such as videos, images, and audios, thereby improving user experience.

In some upgrade scenarios, after dynamic partition upgrade data is written, there are a plurality of sub-partitions whose sizes are reduced in the dynamic partition (Super), and a plurality of available storage space may be generated. In this case, the electronic device 100 may move forward all sub-partitions in sequence after the first sub-partition whose size is reduced, thereby integrating a plurality of available storage space into one contiguous available storage space and placing the contiguous available storage space at the end of the dynamic partition (Super).

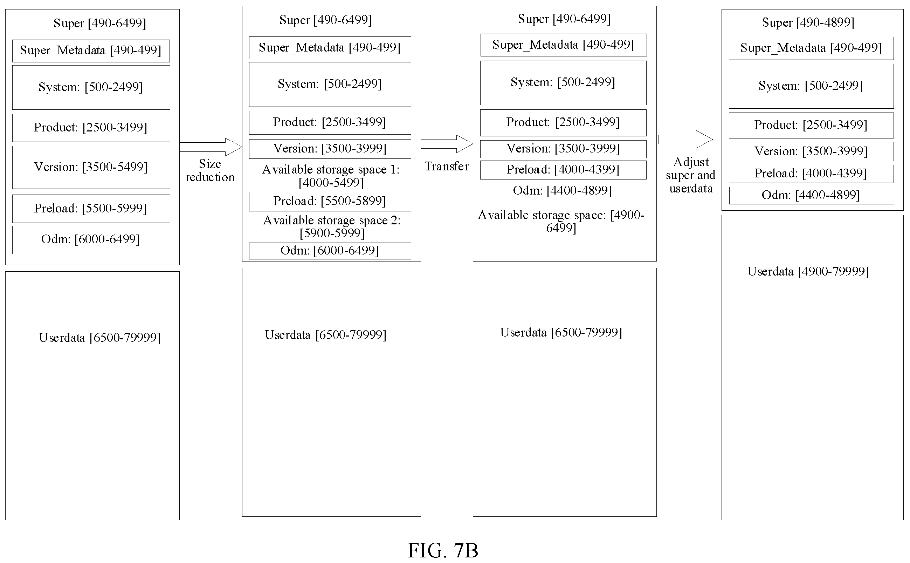

FIG. 7B is a schematic diagram of performing partition transfer after sizes of a plurality of sub-partitions are reduced according to an embodiment of this application. As shown in FIG. 7B, the dynamic partition (Super) may include sub-partitions System, Product, Version, Preload, and Odm. Address ranges of the sub-partitions are [500-2499], [2500-3499], [3500-5499], [5500-5999], and [6000-6499] in sequence. The address range of the dynamic partition (Super) of the electronic device 100 is [490-6499], and the address range of the user data partition (Userdata) is [6500-79999].

A sub-partition whose size is reduced may include the Version sub-partition and the Preload sub-partition. The size of the Version sub-partition is reduced from [3500-5499] to [3500-3999]. The size of the preload sub-partition is reduced from [5500-5999] to [5500-5899]. The Sizes of the version sub-partition and the Preload sub-partition are reduced to generate two available storage space: available storage space 1 and available storage space 2. An address range of the available storage space 1 is [4000-5499] and an address range of the available storage space 2 is [5900-5999].

In this case, the Preload sub-partition and the Odm sub-partition may be moved forward in sequence. For example, the electronic device 100 may first move the Preload sub-partition forward from [5500-5899] to [4000-4399]. Then, the electronic device 100 may move the Odm sub-partition forward from [6000-6499] to [4400-4899]. In this case, the available storage space 1 and the available storage space 2 are integrated into a contiguous available storage space [4900-6499].

Subsequently, the electronic device 100 may reduce the size of the dynamic partition (Super) and increase the size of the user data partition (Userdata). Refer to FIG. 7B. A size of storage space corresponding to the dynamic partition (Super) is reduced from the original [490-6499] to [490-4899]. Accordingly, the storage space corresponding to the user data partition (Userdata) is expanded from the original [6500-79999] to [4900-79999].

In the example shown in FIG. 7B, similarly, optionally, the electronic device 100 may use Metadata2 to update current Super _Metadata of the electronic device 100; and may use the second partition table to update the memory partition table (that is, the first partition table). Metadata2 and the second partition table are not reflected in Userdata in FIG. 7B.

The partition transfer method shown in FIG. 6 has limitations: Only independent sub-partitions can be transferred. This requires that sub-partitions of the dynamic partition (Super) after the target sub-partition are all fixed "independent entities", that is, independent sub-partitions. If there is a dynamic variable partition (that is, a non-independent sub-partition), the variable partition cannot be transferred, which hinders the reduction of the size of the dynamic partition (Super) and the increase of the size of the user data partition (Userdata).

Specifically, in some upgrade scenarios, one or more sub-partitions in the upgraded dynamic partition (Super) may be expanded. In this case, an independent sub-partition is expanded from an original contiguous storage block to a plurality of noncontiguous storage blocks. The plurality of noncontiguous storage blocks are associated with each other. Any storage block may be referred to as a variable partition (that is, a non-independent sub-partition).

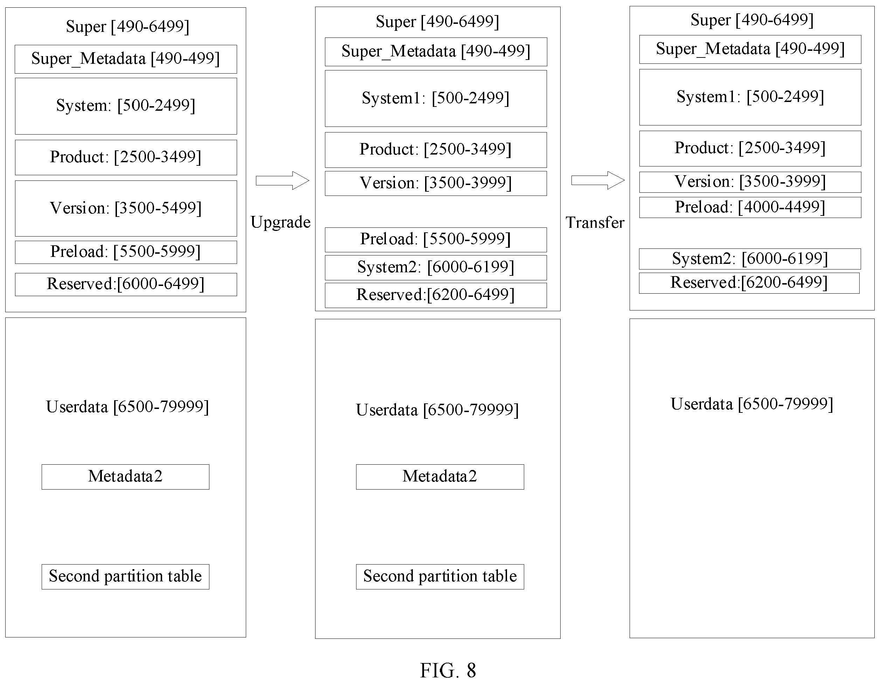

FIG. 8 is a schematic diagram of partition transfer including a variable partition according to an embodiment of this application.

As shown in FIG. 8, the dynamic partition (Super) may include sub-partitions System, Product, Version, and Preload. Address ranges of the sub-partitions are [500-2499], [2500-3499], [3500-5499], and [5500-5999] in sequence. The dynamic partition (Super) may further include a part of reserved available storage space, denoted as a Reserved partition. An address range of the Reserved partition is, for example, [6000-6499], indicating that a partition size is 500. The address range of the dynamic partition (Super) of the electronic device 100 is [490-6499], and the address range of the user data partition (Userdata) is [6500-79999].

In this case, the first partition table of the electronic device 100 is shown in Table 6.1.

**Table 6.1**

| Partition name | Base address offset | Size (storage unit) | Address range |
|---|---|---|---|
| Common | 0 | 100 | [0-99] |
| ... | ... | ... | ... |
| Super | 490 | 6010 | [490-6499] |
| Userdata | 6500 | 73500 | [6500-79999] |
| ... | ... | ... | ... |

Super_Metadata of the dynamic partition may be shown in Table 6.2.

**Table 6.2**

| Sub-partition name | Base address offset | Size (storage unit) | Address range |
|---|---|---|---|
| Metadata2 | 490 | 10 | [490-499] |
| System | 500 | 2000 | [500-2499] |
| Product | 2500 | 1000 | [2500-3499] |
| Version | 3500 | 2000 | [3500-5499] |
| Preload | 5500 | 500 | [5500-5999] |
| Reserved | 6000 | 500 | [6000-6499] |
| ... | ... | ... | ... |

Metadata2 of the system upgrade package buffered in Userdata received by the electronic device 100 may be shown in Table 6.3.

**Table 6.3**

| Sub-partition name | Base address offset | Size (storage unit) | Address range |
|---|---|---|---|
| Metadata2 | 490 | 10 | [490-499] |
| System | 500 | 2200 | [500-2699] |
| Product | 2700 | 1000 | [2700-3699] |
| Version | 3700 | 500 | [3500-4199] |
| Preload | 4200 | 500 | [4200-4699] |
| ... | ... | ... | ... |

The second partition table adapted to Metadata2 in the system upgrade package may be shown in Table 6.4.

**Table 6.4**

| Partition name | Base address offset | Size (storage unit) | Address range |
|---|---|---|---|
| Common | 0 | 100 | [0-99] |
| ... | ... | ... | ... |
| Super | 490 | 4010 | [490-4699] |
| Userdata | 4700 | 75300 | [4700-79999] |
| ... | ... | ... | ... |

As shown in Table 6.3, storage space 2200 required for the upgrade data of the System sub-partition exceeds the size of the original System sub-partition 2000. In this case, as shown in FIG. 8, the System sub-partition may first request the dynamic partition (Super) for a reserved available storage space, used for expanding the System sub-partition to meet a storage requirement for upgrade data of the System sub-partition. For example, the System sub-partition may first request for 200 storage units from the dynamic partition (Super). In this case, the System sub-partition is expanded into two variable partitions: System1 [500-2499] and System2 [6000-6199]. The System sub-partition including System1 and System2 may be referred to as a first sub-partition. System data in the system upgrade package that needs to be written into the System sub-partition may be referred to as first sub-partition data. In this case, the size of the Version sub-partition may be reduced from [3500-5499] to [3500-3999].

Under the limitation of only supporting the transfer of independent sub-partitions, the electronic device 100 cannot transfer storage blocks System1 and System2 based on the method shown in FIG. 7A or FIG. 7B. As shown in FIG. 8, the Preload sub-partition may be transferred from the original [5500-5999] to [4000-4499]. However, because System2 is a variable partition, System2 cannot be transferred. Therefore, an address range of System2 is still [6000-6199].

In this case, the electronic device 100 cannot reduce the size of the dynamic partition (Super) and cannot expand the size of the user data partition (Userdata). In other words, the available storage space can still be allocated to the dynamic partition (Super) only, but cannot be allocated to the user data partition (Userdata) for storing user data. The waste of storage resources cannot be resolved.

In some embodiments, the electronic device 100 may alternatively transfer storage blocks of variable partitions. However, at this time, the electronic device 100 needs to modify a device mapper (device mapper) and Super _Metadata accordingly to ensure that after the transfer, the electronic device 100 can correctly load sub-partition data stored non-successively. The device mapper records a mapping relationship between a logical device and a physical device, and the mapping relationship may be used for locating sub-partition data stored non-successively.

Using the foregoing System2 as an example, after transferring the Preload sub-partition to [4000-4499], the electronic device 100 may transfer System2 from the original [6000-6199] to [4500-4699]. In addition, the electronic device 100 may modify the device mapper to indicate that the next storage unit of the last storage unit 2499 of System1 is the first storage unit 4500 of System2. In this way, based on the mapping relationship in the device mapper, after loading System1, the electronic device 100 may jump to the storage unit 4500 to continue loading the System sub-partition data in System2. Furthermore, the electronic device 100 can reduce the size of the dynamic partition (Super) and expand the size of the user data partition (Userdata).

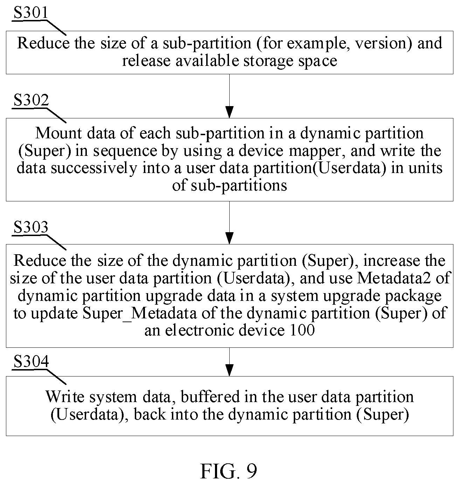

However, modifying the device mapper and Super _Metadata is complicated. To resolve the foregoing problems, an embodiment of this application provides another partition transfer method. FIG. 9 is a flowchart of another partition transfer according to an embodiment of this application.

S301. Reduce the size of a sub-partition (for example, version) and release available storage space. For this step, refer to the description of S201. Details are not described here.

S302. Mount data of each sub-partition in the dynamic partition (Super) in sequence through the device mapper, and write the data successively into the user data partition (Userdata) in units of sub-partitions.

When the device mapper is used to mount the data of each sub-partition in the dynamic partition (Super), the electronic device 100 may successively read all the data of the corresponding sub-partition based on the mapping relationship of the variable partition stored in the device mapper. After reading all the data of the sub-partition, the electronic device 100 may continue to read the next sub-partition. Similarly, the electronic device 100 may successively read all data of the sub-partition based on the mapping relationship of the variable partition of the next sub-partition stored in the device mapper.

In this embodiment of this application, after reading out all the data of a sub-partition, the electronic device 100 may write all the data into a contiguous storage space in the user data partition (Userdata). In addition, all the data of the next sub-partition is written immediately after the previous sub-partition at the location of the user data partition (Userdata).

Preferably, the electronic device 100 may write the data read from each sub-partition in the dynamic partition (Super) to the tail of the user data partition (Userdata). Specifically, the electronic device 100 may request the user data partition (Userdata) for a contiguous storage space of a corresponding size based on the size of the dynamic partition upgrade data in the system upgrade package, denoted as a virtual dynamic partition (V2). The virtual dynamic partition (V2) is also referred to as a first area in the user data partition (Userdata). The virtual dynamic partition (V2) is located at the end of the user data partition (Userdata), and the size of the virtual dynamic partition (V2) is greater than or equal to the size of the dynamic partition upgrade data in the system upgrade package. Then, the electronic device 100 may start from the base address of the virtual dynamic partition (V2), and write, into the virtual dynamic partition (V2) in sequence, the data of each sub-partition read by the device mapper.

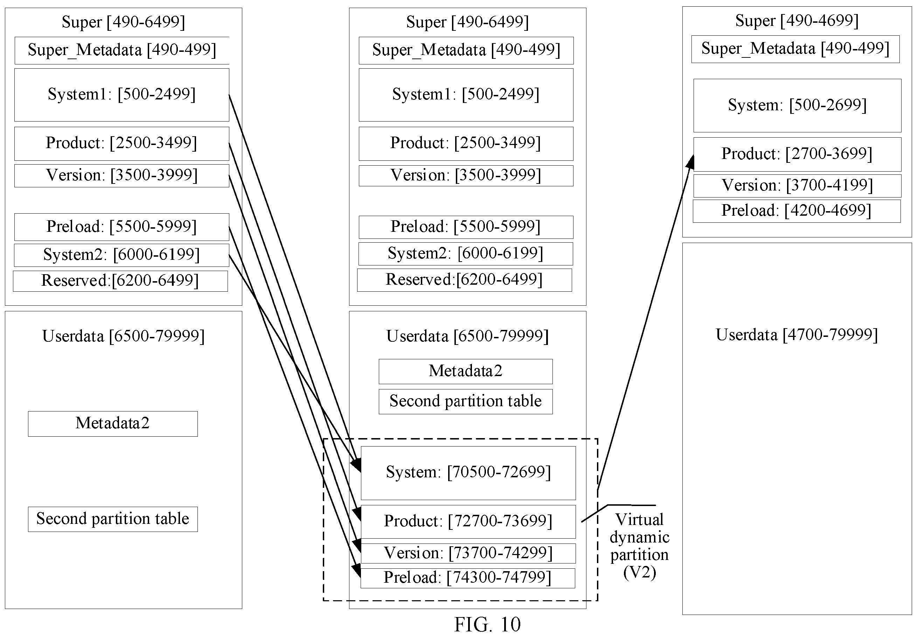

FIG. 10 is a schematic diagram of another partition transfer in the presence of variable partitions according to an embodiment of this application.
after upgrade, the dynamic partition (Super) may include sub-partitions System, Product, Version, and Preload. The System sub-partition includes variable partitions System1 and System2. The System sub-partition including the variable partitions System1 and System2 may be referred to as a first sub-partition. As shown in FIG. 10, System1 and System2 are noncontiguous in the memory. The electronic device 100 may successively read, through the device mapper, data stored in System1 and System2.

Refer to the description of FIG. 8. The address ranges of System1, Product, Version, Preload, and System2 are [500-2499], [2500-3499], [3500-5499], [5500-5999], and [6000-6199] in sequence. The address range of the dynamic partition (Super) of the electronic device 100 is [490-6499], and the address range of the user data partition (Userdata) is [6500-79999].

**In this** embodiment of this application, after a non-independent sub-partition (a sub-partition including a plurality of noncontiguous storage blocks) is obtained through the upgrade, the electronic device 100 may request to the user data partition (Userdata) for N1 storage units. N1≥N2. N2 is a total storage space occupied by each sub-partition in the dynamic partition (Super) after the upgrade. The electronic device 100 may determine a specific value of N2 based on the size of each sub-partition after the upgrade, and then determine N1. Alternatively, the electronic device 100 may determine N1 by determining a specific value of N2 based on Metadata2 of the dynamic partition upgrade data in the system upgrade package or the size of the dynamic partition in the target operating system OS2.0 indicated by the second partition table (where Metadata2 corresponds to the size).

**In** the example shown in FIG. 10, a total storage space occupied by each sub-partition in the dynamic partition (Super) is 4200 (N2). For example, the electronic device 100 may request to the user data partition (Userdata) for a virtual dynamic partition (V2) including 10,000 (N1) storage units. An address range of the virtual dynamic partition (V2) is [70000-79999].

The electronic device 100 may first read the data of the System sub-partition and write the data of the System sub-partition into the virtual dynamic partition (V2). The System sub-partition includes the variable partitions System1 and System2. When mounting the System sub-partition through the device mapper, the electronic device 100 may first read a part of the data of the System sub-partition from System1 [500-2499] (a first storage block), and write the part of the data into the virtual dynamic partition (V2) from the base address 70000 of the virtual dynamic partition (V2) in sequence. After traversing of System1 ends, based on indication of the device mapper, the electronic device 100 may immediately jump to System2 [6000-6199] (a second storage block) to read remaining data of the System sub-partition, and continue to write the remaining data into the virtual dynamic partition (V2). As shown in FIG. 10, System sub-partition data in System1 and System2 in the dynamic partition (Super) are successively written into the System sub-partition [70500-72699] in the virtual dynamic partition (V2) (a third storage block [70500-72499] and a fourth storage block [72500-72699]).

Similarly, with reference to the System sub-partition, the electronic device 100 may mount other sub-partitions in the dynamic partition (Super) through the device mapper in sequence, and successively write the data of each sub-partition into the virtual dynamic partition (V2) in sequence. As shown in FIG. 10, the data in the Product sub-partition in the dynamic partition (Super) may be successively written into the Product sub-partition [72700-73699] in the virtual dynamic partition (V2) in sequence. The data in the Version sub-partition in the dynamic partition (Super) may be successively written into the Version sub-partition [73700-74299] in the virtual dynamic partition (V2) in sequence. The data in the Preload sub-partition in the dynamic partition (Super) may be successively written into the Preload sub-partition [74300-74799] in the virtual dynamic partition (V2) in sequence.

S303. Reduce the size of the dynamic partition (Super), expand the size of the user data partition (Userdata), and use Metadata2 of the dynamic partition upgrade data in the system upgrade package to update Super_Metadata of the dynamic partition (Super) of the electronic device 100.

After all the data stored in each sub-partition in the dynamic partition (Super) is written into the user data partition (Userdata), the electronic device 100 may use Metadata2 of the dynamic partition upgrade data in the system upgrade package to refresh Super _Metadata of the dynamic partition (Super) of the electronic device 100. Partition information recorded in Metadata of the dynamic partition upgrade data in the system upgrade package is consistent with that of the virtual dynamic partition (V2). Therefore, the electronic device 100 can use Metadata2 of the dynamic partition upgrade data in the system upgrade package to refresh Super_Metadata of the dynamic partition (Super) of the electronic device 100 without recalculating the size of each partition of the virtual dynamic partition (V2), so as to generate Metadata for describing partition information in the virtual dynamic partition (V2).

For Metadata2 of the dynamic partition upgrade data in the system upgrade package obtained by the electronic device 100, refer to the description of Table 6.3. Details are not described here. In this way, the electronic device 100 does not need to specifically modify an address range of a specific sub-partition in Super_Metadata and noncontiguous storage blocks associated with the non-independent sub-partition.

In addition, referring to S203, the electronic device 100 may update the address range of the dynamic partition (Super) to [490-4699] and update the address range of the user data partition (Userdata) to [4700-79999], so that available storage space in the dynamic partition (Super) is allocated to the user data partition (Userdata) to increase the size of the user data partition (Userdata). In this way, the user can store more user data such as videos, images, and audio, thereby improving user experience.

In this embodiment of this application, the electronic device 100 may directly use the second partition table in the system upgrade package buffered in Userdata to replace the original first partition table without detecting an address partition of the dynamic partition after Metadata2 is updated.

After Metadata2 is used to update current Super _Metadata of the electronic device 100, and the second partition table is used to replace the original first partition table, the electronic device 100 may clean buffered Metadata2 and the second partition table in Userdata.

S304. Write the system data, buffered in the user data partition (Userdata), back into the dynamic partition (Super).

After updating Super _Metadata of the dynamic partition (Super), the electronic device 100 may write data of the System, Product, Version, Preload, and another sub-partition stored in the virtual dynamic partition (V2) back.

Refer to FIG. 10. The System sub-partition data in the original System1 and System2 are successively stored in the address range [500-2699]. The address range [500-2699] is a new System sub-partition. By analogy, the data in the original Product sub-partition [2500-3499] may be migrated to a new Product sub-partition [2700-3699]. The data in the original Version sub-partition [3500-3999] may be migrated to a new Version sub-partition [3700-4199]. The data in the original Preload sub-partition [5500-5999] may be migrated to a new Version sub-partition [4200-4699].

Optionally, when reducing the size of the dynamic partition (Super), the electronic device 100 may alternatively reserve a fixed-size Reserved partition in the dynamic partition (Super) for expansion (not shown in FIG. 8 and FIG. 10). If the Reserved partition is set, accordingly, Metadata2 shown in Table 6.3 may record the Reserved partition. The size of the Reserved partition is not limited in this embodiment of this application. The electronic device 100 may be configured based on experience.

By implementing the partition transfer method shown in FIG. 9, the electronic device 100 may support transfer of the non-independent variable partition in the dynamic partition without specifically modifying the partition information of one or more variable partitions in Super _Metadata. Instead, dynamic partition metadata Metadata2 in the system upgrade package is written directly. This is more convenient and faster.

The method shown in FIG. 9 is also applicable to the upgrade scenario shown in FIG. 5 (where non-independent sub-partitions are not included after the upgrade). In this case, there is no need to use the device mapper when the data of each sub-partition in Super is written into Userdata. Instead, each partition may be written into Userdata at once based on the address range of each sub-partition recorded in Super _Metadata. After using Metadata2 to update the current Super_Metadata of the electronic device 100 and using the second partition table to replace the original first partition table, the electronic device 100 may write the buffered data of Userdata) back into Super.

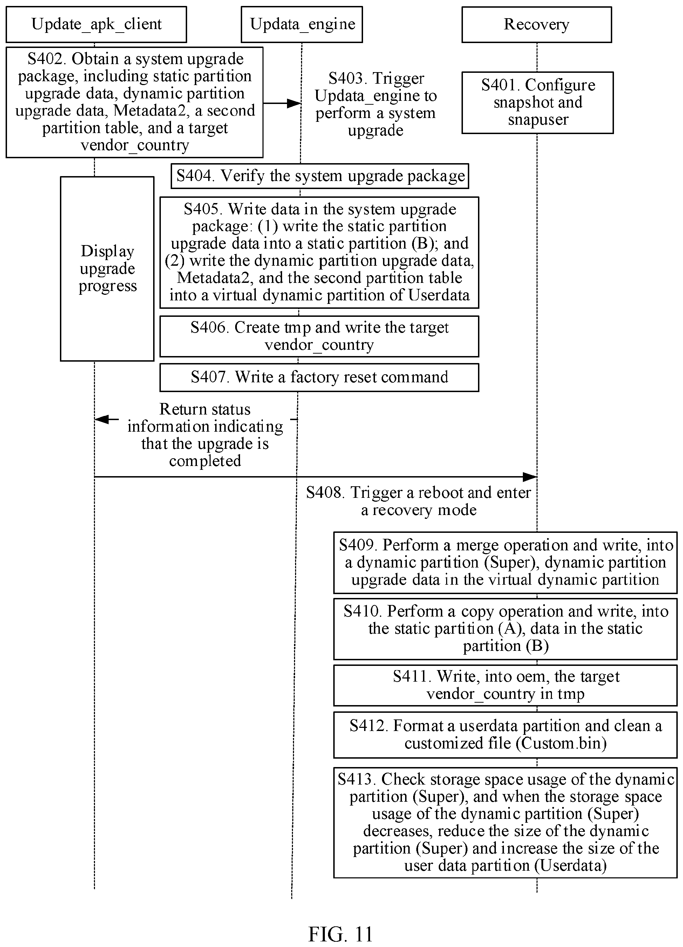

FIG. 11 is a flowchart of another operating system upgrade according to an embodiment of this application. By implementing the system upgrade method shown in FIG. 11, an electronic device 1000 may also modify vendor _country in a basic partition (common) of the electronic device 100 at the same time.

### S401. Configure snapshot and snapuser in a recovery mode of the electronic device 100.

snapshot is a tool that associates physical addresses and logical addresses. When performing a merge operation, the electronic device 100 may, based on snapshot, generate a file map of a COW file in a virtual dynamic partition and a file map of a sub-partition corresponding to the dynamic partition (Super), and then write, into the corresponding sub-partition in the dynamic partition (Super), the COW file in the virtual dynamic partition. snapuser is a tool that compresses and decompresses a COW file and writes, into dynamic partitions (Super), the COW file in the virtual dynamic partition.

In this embodiment of this application, the electronic device 100 may configure snapshot and snapuser in its own recovery mode, so that the electronic device 100 can perform the merge operation in the recovery mode, and then continue to perform a modification operation.

Specifically, the electronic device 100 may write lib_snapshot_utils and libsnapshot _nobinder function libraries in a recovery file. The foregoing lib_snapshot_utils and lib_snapshot _nobinder are used for implementing snapshot in the recovery mode. In addition, the electronic device 100 may alternatively create a Snapuserd file under a system/bin/ path, and write a configuration file Snapuserd.rc into the recovery file. The Snapuserd file created in system/bin/ and the configuration file Snapuserd.rc in the recovery file may be combined to support the recovery mode and provide a snapuser service.

### S402. Obtain a system upgrade package, including static partition upgrade data, dynamic partition upgrade data, Metadata2, a second partition table, and target vendor_country.

The electronic device 100 obtains the system upgrade package from a packet capture server through Update_apk_client. In this embodiment of this application, the system upgrade package further includes the target vendor_country. The target vendor _country is saved in a root directory of the system upgrade package in the form of a target _vendor_country.mbn file. For example, target vendor_country VC2 is recorded in the system upgrade package. The target vendor_country VC2 is different from an official vendor_country VC1 currently used by the electronic device 100.

### S403. Trigger Updata_engine to perform system upgrade.

### S404. Updata_engine verifies the system upgrade package.

### S405. Updata_engine writes data in the system upgrade package into a corresponding memory partition: (1) write the static partition upgrade data into a static partition (B); and (2) writing the dynamic partition upgrade data, Metadata2, and the second partition table into a virtual dynamic partition of Userdata.

Specifically, for steps in S402 to S405, refer to the description of S102 to S105. Details are not described here. An execution sequence of S401 and S402 is not limited in this embodiment of this application.

### S406. Create tmp and write the target vendor_country.

In this embodiment of this application, the electronic device 100 needs to change the vendor _country along with a system upgrade operation. Therefore, after obtaining the upgrade package, Updata_engine further needs to determine whether an upgrade package downloaded from the packet capture server is used for modification. Updata_engine may determine whether to use the upgrade package for modification based on whether the upgrade package includes the target vendor_country. When it is determined that the upgrade package is to be used for modification, Updata_engine may create tmp in the basic partition and write, into tmp, the target vendor_country in the upgrade package. tmp is an area that is in the base partition and that is used for buffering the target vendor _country VC2.

Refer to S402. In this embodiment of this application, the system upgrade package includes upgrade data of the target operating system OS2.0 and the target vendor _country VC2. Therefore, after obtaining the system upgrade package, Updata_engine may determine that the data is also used for modification. At this time, Updata_engine may write the target vendor _country VC2 into the foregoing tmp.

### S407. Write a factory reset command.

After determining that the system upgrade package further includes the target vendor_country, Updata_engine may write the factory reset command during a boot process. Specifically, Updata_engine may write commands in /cache/command:

"--wipe_data","--reason=change_vcand_wipe_data".

The foregoing command is the factory reset command.

Similarly, when Update_engine performs the upgrade operations shown in S404 to S406, Update_apk_client may monitor the progress of the upgrade operations shown in S404 to S406. The electronic device 100 may display a corresponding progress control based on the progress detected by Update_apk_client, to show the upgrade progress to the user.

### S408. Trigger a reboot and enter the recovery mode.

After the upgrade operation is completed, and the factory reset command is written, Updata_engine may return, to Update _apk_client, status information indicating that the upgrade is completed. Accordingly, the progress control may indicate to the user that the upgrade is completed. Later, Update _apk_client may trigger a reboot.

During the reboot process, the electronic device 100 is to read the command in the boot process and perform an operation indicated by the command. In this case, the electronic device 100 may read the factory reset command written in the boot process in S407. After parsing the factory reset command, the electronic device 100 may enter the recovery mode.

### S409. Perform a merge operation and write, into the dynamic partition (Super), dynamic partition upgrade data in the virtual dynamic partition.

Based on snapshot and snapuser that have been configured in the recovery mode, after entering the recovery mode, recovery may use snapshot to read metadata (that is, Super _Metadata) in the dynamic partition (Super) and the COW file in the virtual dynamic partition, and then use snapuser to write, into the dynamic partition (Super), the COW file in the virtual dynamic partition. For details, refer to the description in S108.

### S410. Perform a copy operation and write, into the static partition (A), data in the static partition (B).

### S411. Write, into oem, the target vendor_country in tmp.

Recovery may write, into oem, the target vendor_country VC2 buffered in tmp. oem is an area in the basic partition in which the official vendor_country VC1 is stored. After the target vendor _country VC2 is written into oem, the official vendor _country of the electronic device 100 is updated to a new vendor_country VC2. Subsequently, recovery may clean tmp.

### S412. Format a userdata partition and clean a customized file (Custom.bin).

Because the electronic device is currently in the recovery mode, after the merge operation, the copy operation, and the modification operation are performed, that is, after S409 to S411 are performed, the electronic device 100 may immediately perform a factory reset operation and format the Userdata partition. When the Userdata partition is formatted, the customized file (Custom.bin) in the Userdata partition is also cleaned.

In this way, during the next boot, the electronic device 100 can read the new vendor _country (that is, VC2) in oem and write the vendor_country into the customized file (Custom.bin) in the user data partition (Userdata), facilitating calling while the operating system is running.

### S413. Check storage space usage of the dynamic partition (Super), where when the storage space usage of the dynamic partition (Super) decreases, the size of the dynamic partition (Super) is reduced, and the size of the user data partition (Userdata) is increased. For S413, refer to S110. Details are not described here.

Implementing the method shown in FIG. 11, in the upgrade scenario in which the operating system is upgraded in the recovery mode, and the vendor_country is modified at the same time, after the current operating system is upgraded to the target operating system, and the current vendor _country is modified to the target vendor _country, the electronic device 100 may also check storage space usage of the dynamic partition (Super). In this way, after a requirement of the dynamic partition (Super) for storage space is lowered, the electronic device 100 may also allocate, to the user data partition (Userdata), storage space originally allocated to the dynamic partition (Super), so as to increase a user data storage capability of the electronic device 100, thereby improving the user experience.

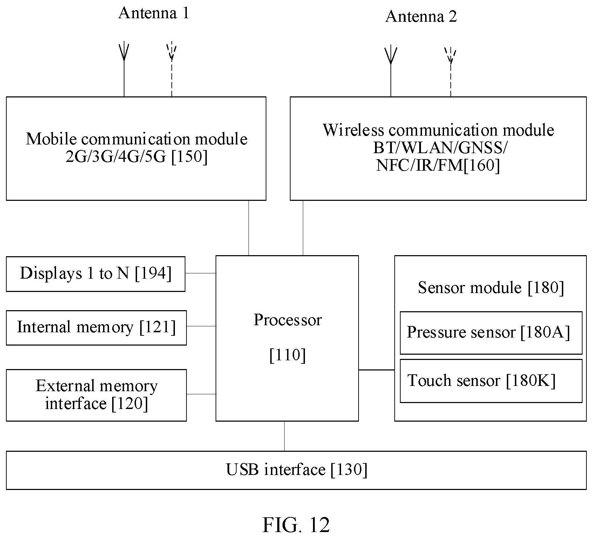

FIG. 12 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, an antenna 1, an antenna 2, a mobile communication module 150, a wireless communication module 160, a sensor module 180, a display 194, and the like. The sensor module 180 may include a pressure sensor 180A, a touch sensor 180K, and the like.

It may be understood that the structure shown in embodiments of the present invention does not constitute a specific limitation on the electronic device 100. In some other embodiments of this application, the electronic device 100 may further include more or fewer components than those shown in the figure, some components may be combined, some components may be split, or different component arrangements may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors. The controller may generate an operation control signal based on instruction operation code and a time-sequence signal, to control instruction fetching and instruction executing. A memory configured to store instructions and data may be further disposed in the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

For example, the processor 110 may be coupled to the touch sensor 180K through the I2C interface, so that the processor 110 communicates with the touch sensor 180K through the I2C bus interface, to implement a touch function of the electronic device 100. The processor 110 communicates with a Bluetooth module in the wireless communication module 160 through the UART interface, to implement a Bluetooth function. The MIPI interface includes a display serial interface (display serial interface, DSI). The processor 110 communicates with the display 194 through the DSI interface, to implement a display function of the electronic device 100. The GPIO interface may be configured by software. The GPIO interface may be configured as a control signal, or may be configured as a data signal. The GPIO interface may alternatively be configured as an I2C interface, an I2S interface, a UART interface, an MIPI interface, or the like.

The USB interface 130 is an interface that complies with a USB standard specification, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device. In this embodiment of this application, the electronic device 100 may be connected to a dedicated modification tool through the USB interface 130 to modify vendor _country of the electronic device 100.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be further multiplexed to improve utilization of the antennas. For example, the antenna 1 may be multiplexed into a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal obtained after modulation by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a low frequency baseband signal to be sent into a medium and high frequency signal. The demodulator is configured to demodulate the received electromagnetic wave signal into a low-frequency baseband signal. Then, the demodulator transmits the low frequency baseband signal obtained through demodulation to the baseband processor for processing. After being processed by the baseband processor, the low frequency baseband signal is transmitted to the application processor. The application processor outputs a sound signal through an audio device (for example, a speaker, a receiver, or the like), or displays an image or a video through the display 194. In some embodiments, the modem processor may be an independent component. In some other embodiments, the modem processor may be independent of the processor 110, and disposed in a same component with the mobile communication module 150 or another functional module.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In this embodiment of this application, the electronic device 100 may obtain a system upgrade package from a packet capture server through the wireless communication function provided by the antenna 1, the antenna 2, the mobile communication module 150, the wireless communication module 160, the modem processor, and the baseband processor, and then performs a system upgrade operation.

The electronic device 100 implements a display function through the GPU, the display 194, the application processor, and the like. The GPU is a microprocessor for image processing and is connected to the display 194 and the application processor. The GPU is configured to perform mathematical and geometric calculation for graphics rendering. The processor 110 may include one or more GPUs that execute program instructions to generate or change display information.

The display 194 is configured to display an image, a video, and the like. The display 194 includes a display panel. The display 194 includes a display panel. The display panel may be a liquid crystal display (liquid crystal display, LCD). The display panel may alternatively be an organic light-emitting diode (organic light-emitting diode, OLED), an active-matrix organic light emitting diode (active-matrix organic light emitting diode, AMOLED), a flex light-emitting diode (flex light-emitting diode, FLED), a miniled, a microled, a micro-oled, a quantum dot light emitting diode (quantum dot light emitting diode, QLED), or the like. In some embodiments, the electronic device may include one or N displays 194, and N is a positive integer greater than 1.

In an embodiment of this application, the electronic device 100 may display a user interface, such as a user interface for obtaining the system upgrade package, a user interface for displaying the upgrade progress during the system upgrade process, through the display function provided by the GPU, the display 194, and the application processor, so that a user can perform the system upgrade operation.

The internal memory 121 may include one or more random access memories (random access memories, RAMs) and one or more non-volatile memories (non-volatile memories, NVMs). The random access memory may be directly read and written by the processor 110, may be configured to store executable programs (for example, device instructions) of an operating system or other running programs, or may be configured to store data of users and applications. The non-volatile memory may also store the executable programs, the data of the users and the applications, and the like, and may be loaded into the random access memory in advance for the processor 110 to perform direct reading and writing.

In embodiments of this application, the memory corresponding to the partition table of the electronic device 100 shown in FIG. 1 is the non-volatile memory. Program code such as vendor_country of the electronic device 100, a bootloader program, and a system operation program is stored in the non-volatile memory. When the electronic device 100 is powered on, the electronic device 100 may load the program code stored in the non-volatile memory into the random access memory, and then send the program code to the processor 110 for execution, so as to implement the system upgrade method provided in embodiments of this application.

The external memory interface 120 may be configured to connect to an external non-volatile memory, to expand a storage capability of the electronic device 100. The external non-volatile memory communicates with the processor 110 by using the external memory interface 120, to implement a data storage function, for example

The pressure sensor 180A is configured to sense a pressure signal, and may convert the pressure signal into an electrical signal. In some embodiments, the pressure sensor 180A may be disposed on the display 194. When a touch operation is performed on the display 194, the electronic device 100 detects strength of the touch operation based on the pressure sensor 180A. The electronic device 100 may further calculate a touch position based on a detection signal of the pressure sensor 180A.

The touch sensor 180K is also referred to as a "touch device". The touch sensor 180K may be disposed on the display 194. A touchscreen formed by the touch sensor 180K and the display 194, is also referred to as a "touch control screen". The touch sensor 180K is configured to detect a touch operation performed on or near the touch sensor. The touch sensor may transmit the detected touch operation to the application processor, to determine a touch event type. Visual output related to the touch operation may be provided by using the display 194. In some other embodiments, the touch sensor 180K may alternatively be disposed on a surface of the electronic device 100, and at a location different from that of the display 194.

In embodiments of this application, the electronic device 100 may detect user operations such as clicking/tapping and sliding on the screen by the user through a touch detection capability provided by the touch sensor 180K, obtain the system upgrade package, and display the system upgrade progress, and so on.

The term "user interface (user interface, UI)" in the specification, the claims, and the accompanying drawings of this application is a medium interface for interaction and information exchange between an application or an operating system and a user, and implements the conversion between an internal form of information and a form of the information acceptable to the user. The user interface of the application is source code written in a specific computer language such as java and an extensible markup language (extensible markup language, XML). Interface source code is parsed and rendered on a terminal device, and is finally presented as content that can be recognized by the user, such as a picture, text, a button, and other controls. A control (control), also referred to as a widget (widget), is a basic element of the user interface. Typical controls include a toolbar (toolbar), a menu bar (menu bar), a text box (text box), a button (button), a scrollbar (scrollbar), a picture, and text. Attributes and content of the controls in the interface are defined by tags or nodes. For example, XML specifies the controls included in the interface through nodes such as <Textview>, <ImgView>, and <VideoView>. One node corresponds to one control or attribute in the interface, and the node is parsed and rendered, and is then presented as user-visible content. In addition, interfaces of many applications, such as hybrid applications (hybrid application), usually further include web pages. The web page, also referred to as a page, may be understood as a special control embedded in an application interface. The web page is source code written in a specific computer language, such as the hyper text markup language (hyper text markup language, HTML), cascading style sheets (cascading style sheets, CSS), and java script (JavaScript, JS). Web page source code may be loaded and displayed by a browser or a web page display component with similar functions to the browser as content that can be recognized by the user. Specific content included in the web page is also defined by tags or nodes in the source code of the web page. For example, HTML defines elements and attributes of the web page through <p>, <img>, <video>, and <canvas>.

Graphical user interface (graphic user interface, GUI) that is a commonly used form of the user interface refers to a user interface that is related to a computer operation that is displayed graphically. An icon, a window, a control, and another interface element is displayed on the display of the electronic device. The control may include an icon, a button, a menu, a tab, a text box, a dialog box, a status bar, a navigation bar, a Widget, and another visual interface element.

As used in this specification and the claims of this application, singular expression forms, "one", "a", "said", "foregoing", "the", and "this", are intended to also include a plural expression form, unless clearly indicated to the contrary in the context. It should be further understood that the term "and/or" used in this application indicates and includes any or all possible combinations of one or more listed items. As used in the foregoing embodiments, based on the context, the term "when" may be interpreted as a meaning of "if", "after", "in response to determining... ", or "in response to detecting... ". Similarly, based on the context, the phrase "if determining" or "if detecting (a stated condition or event)" may be interpreted as a meaning of "when determining... ", "in response to determining... ", "when detecting (a stated condition or event)", or "in response to detecting ... (a stated condition or event)".

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or any other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, an SSD), or the like.

A person of ordinary skill in the art may understand that all or some of the procedures in the methods in embodiments may be implemented by using a computer program instructing relevant hardware. The program may be stored in a computer-readable storage medium. When the program is executed, the procedures in the foregoing method embodiments may be performed. The foregoing storage medium includes any medium that can store program code, such as a ROM, a RAM, a magnetic disk, or an optical disc.

## Claims

1. An operating system upgrade method, applied to an electronic device (100), wherein a memory of the electronic device (100) comprises a first partition and a second partition, the first partition is configured to store first data of a first operating system installed on the electronic device (100), the second partition is configured to store user data, the memory further comprises a first partition table and first metadata, the first partition table is used for recording partition information of a plurality of partitions in the memory, the plurality of partitions comprise the first partition and the second partition, and the first metadata is used for storing partition information of one or more sub-partitions in the first partition; and the method comprises:
obtaining (S102) upgrade data, wherein the upgrade data comprises second data of a second operating system, second metadata, and a second partition table, the second data corresponds to the first data, partition information of one or more sub-partitions in the first partition corresponding to the second data is recorded in the second metadata, and partition information of a plurality of partitions in the memory corresponding to the second operating system is recorded in the second partition table;
writing (S105) the second data into the first partition;
writing (S105) the second metadata to replace the first metadata;
writing (S105) the second partition table to replace the first partition table; and
determining; wherein
when, for a sub-partition of the one or more sub-partitions, an actual size of storage space required for the upgrade data is smaller than a size of the sub-partition of the one or more sub-partitions, the size of the sub-partition is reduced (S110; S201; S301) by adjusting the size based on the actual size to release available storage space, so that a size of the first partition recorded in the second partition table is smaller than the size of the first partition recorded in the first partition table, a size of the second partition recorded in the second partition table is greater than the size of the second partition recorded in the first partition table, and after the writing (S105) the second partition table to replace the first partition table, the size of the first partition of the memory is reduced, and the size of the second partition is increased.

2. The operating system upgrade method according to claim 1, wherein the writing (S105) the second metadata to replace the first metadata specifically comprises: after writing (S302), into the second partition, the second data stored in the first partition, writing the second metadata to replace the first metadata; and after the first metadata is replaced, writing (S304), back into the first partition, the second data buffered in the second partition; and
the writing the second partition table to replace the first partition table specifically comprises:
after the second data buffered in the second partition is written back into the first partition, writing the second partition table to replace the first partition table.

3. The operating system upgrade method according to claim 2, wherein the writing the second data into the first partition specifically comprises: writing first sub-partition data in the second data into a first sub-partition in the first partition, wherein the first sub-partition is a sub-partition that is in the first partition and that comprises a plurality of noncontiguous storage blocks, and the first sub-partition data is stored in the plurality of noncontiguous storage blocks; and
the writing, into the second partition, the second data stored in the first partition specifically comprises:
writing the first sub-partition data, stored in a first storage block, into a third storage block of the second partition; and writing the first sub-partition data, stored in a second storage block, into a fourth storage block of the second partition, wherein
the first storage block and the second storage block are two noncontiguous storage blocks in the first sub-partition, and the third storage block and the fourth storage block are two contiguous storage blocks in the second partition.

4. The operating system upgrade method according to claim 2 or 3, wherein the writing (S302), into the second partition, the second data stored in the first partition specifically comprises: writing the second data, stored in the first partition into, a first area of the second partition, wherein the first area is at the end of the second partition.

5. The operating system upgrade method according to claim 1, wherein the writing the second metadata to replace the first metadata specifically comprises:
moving (S202) data in a second sub-partition in the first partition from a second area of the first partition to a third area, wherein the second sub-partition is a sub-partition after a third sub-partition, and the third sub-partition is the sub-partition whose size is reduced (S201) after the second data is written into the first partition; and
after the data is moved forward, writing the second metadata to replace the first metadata.

6. The operating system upgrade method according to any one of claims 1 to 5, wherein the writing (S105) the second data into the first partition specifically comprises:
writing the second data into the second partition in the form of a copy-on-write (COW) file to obtain third data; and
writing the third data into the first partition.

7. The operating system upgrade method according to any one of claims 1 to 6, wherein before the writing (S105) the second data into the first partition, the method further comprises: performing a reboot operation and during the reboot, entering a recovery mode for factory reset; and the writing the second data into the first partition, the writing the second metadata to replace the first metadata, and the writing the second partition table to replace the first partition table are implemented in the recovery mode.

8. The operating system upgrade method according to any one of claims 1 to 7, wherein the first partition is a dynamic partition in an Android system; and the second partition is a user data partition in the Android system.

9. The operating system upgrade method according to any one of claims 1 to 8, wherein the first operating system is a demo device operating system; and the second operating system is a commercial device operating system.

10. An electronic device (100), comprising one or more processors (110) and one or more memories (121), wherein the one or more memories (121) are coupled to the one or more processors (110), the one or more memories (121) are configured to store computer program code, the computer program code comprises computer instructions, and the one or more processors (110) are configured to perform, when executing the computer instructions, the operating system upgrade method according to any one of claims 1 to 9.

11. A computer-readable storage medium, comprising instructions, wherein the instructions, when run on an electronic device (100), causes the electronic device (100) to perform the operating system upgrade method according to any one of claims 1 to 9.

## Patentansprüche

1. Betriebssystem-Aktualisierungsverfahren, das auf eine elektronische Vorrichtung (100) angewendet wird, wobei ein Speicher der elektronischen Vorrichtung (100) eine erste Partition und eine zweite Partition umfasst, die erste Partition dazu konfiguriert ist, erste Daten eines auf der elektronischen Vorrichtung (100) installierten ersten Betriebssystems zu speichern, die zweite Partition dazu konfiguriert ist, Benutzerdaten zu speichern, der Speicher ferner eine erste Partitionstabelle und erste Metadaten umfasst, die erste Partitionstabelle zum Aufzeichnen von Partitionsinformationen einer Vielzahl von Partitionen in dem Speicher verwendet wird, die Vielzahl von Partitionen die erste Partition und die zweite Partition umfassen, und die ersten Metadaten zum Speichern von Partitionsinformationen einer oder mehrerer Subpartitionen in der ersten Partition verwendet werden; und wobei das Verfahren umfasst:
Erhalten (S102) von Aktualisierungsdaten, wobei die Aktualisierungsdaten zweite Daten eines zweiten Betriebssystems, zweite Metadaten und eine zweite Partitionstabelle umfassen, die zweiten Daten den ersten Daten entsprechen, Partitionsinformationen einer oder mehrerer den zweiten Daten entsprechender Subpartitionen in der ersten Partition in den zweiten Metadaten aufgezeichnet sind, und Partitionsinformationen einer Vielzahl von dem zweiten Betriebssystem entsprechenden Partitionen in dem Speicher in der zweiten Partitionstabelle aufgezeichnet sind;
Schreiben (S105) der zweiten Daten in die erste Partition;
Schreiben (S105) der zweiten Metadaten, um die ersten Metadaten zu ersetzen;
Schreiben (S105) der zweiten Partitionstabelle, um die erste Partitionstabelle zu ersetzen; und
Bestimmen, wobei
wenn für eine Subpartition der einen oder der mehreren Subpartitionen eine tatsächliche Größe an Speicherplatz, der für die Aktualisierungsdaten erforderlich ist, kleiner als eine Größe der Subpartition der einen oder der mehreren Subpartitionen ist, die Größe der Subpartition durch Anpassen der Größe basierend auf der tatsächlichen Größe reduziert wird (S110; S201; S301), um verfügbaren Speicherplatz freizugeben, so dass eine in der zweiten Partitionstabelle aufgezeichnete Größe der ersten Partition kleiner als die in der ersten Partitionstabelle aufgezeichnete Größe der ersten Partition ist, eine in der zweiten Partitionstabelle aufgezeichnete Größe der zweiten Partition größer als die in der ersten Partitionstabelle aufgezeichnete Größe der zweiten Partition ist, und nach dem Schreiben (S105) der zweiten Partitionstabelle zum Ersetzen der ersten Partitionstabelle die Größe der ersten Partition des Speichers reduziert wird und die Größe der zweiten Partition vergrößert wird.

2. Betriebssystem-Aktualisierungsverfahren nach Anspruch 1, wobei das Schreiben (S105) der zweiten Metadaten zum Ersetzen der ersten Metadaten spezifisch Folgendes umfasst: nach einem Schreiben (S302) der in der ersten Partition gespeicherten zweiten Daten in die zweite Partition, Schreiben der zweiten Metadaten, um die ersten Metadaten zu ersetzen; und nachdem die ersten Metadaten ersetzt worden sind, Zurückschreiben (S304) der in der zweiten Partition zwischengespeicherten zweiten Daten in die erste Partition; und
das Schreiben der zweiten Partitionstabelle zum Ersetzen der ersten Partitionstabelle spezifisch Folgendes umfasst:
nachdem die in der zweiten Partition zwischengespeicherten zweiten Daten in die erste Partition zurückgeschrieben worden sind, Schreiben der zweiten Partitionstabelle, um die erste Partitionstabelle zu ersetzen.

3. Betriebssystem-Aktualisierungsverfahren nach Anspruch 2, wobei das Schreiben der zweiten Daten in die erste Partition spezifisch Folgendes umfasst: Schreiben von ersten Subpartitionsdaten in den zweiten Daten in eine erste Subpartition in der ersten Partition, wobei die erste Subpartition eine Subpartition ist, die sich in der ersten Partition befindet und die eine Vielzahl von nicht zusammenhängenden Speicherblöcken umfasst, und die ersten Subpartitionsdaten in der Vielzahl von nicht zusammenhängenden Speicherblöcken gespeichert werden; und
das Schreiben der in der ersten Partition gespeicherten zweiten Daten in die zweite Partition spezifisch Folgendes umfasst:
Schreiben der in einem ersten Speicherblock gespeicherten ersten Subpartitionsdaten in einen dritten Speicherblock der zweiten Partition; und Schreiben der in einem zweiten Speicherblock gespeicherten ersten Subpartitionsdaten in einen vierten Speicherblock der zweiten Partition, wobei
der erste Speicherblock und der zweite Speicherblock zwei nicht zusammenhängende Speicherblöcke in der ersten Subpartition sind, und der dritte Speicherblock und der vierte Speicherblock zwei zusammenhängende Speicherblöcke in der zweiten Partition sind.

4. Betriebssystem-Aktualisierungsverfahren nach Anspruch 2 oder 3, wobei das Schreiben (S302) der in der ersten Partition gespeicherten zweiten Daten in die zweite Partition spezifisch Folgendes umfasst: Schreiben der in der ersten Partition gespeicherten zweiten Daten in einen ersten Bereich der zweiten Partition, wobei sich der erste Bereich am Ende der zweiten Partition befindet.

5. Betriebssystem-Aktualisierungsverfahren nach Anspruch 1, wobei das Schreiben der zweiten Metadaten zum Ersetzen der ersten Metadaten spezifisch Folgendes umfasst:
Bewegen (S202) von Daten in einer zweiten Subpartition in der ersten Partition aus einem zweiten Bereich der ersten Partition in einen dritten Bereich, wobei die zweite Subpartition eine Subpartition nach einer dritten Subpartition ist, und die dritte Subpartition die Subpartition ist, deren Größe reduziert wird (S201), nachdem die zweiten Daten in die erste Partition geschrieben worden sind; und
nachdem die Daten nach vorne bewegt worden sind, Schreiben der zweiten Metadaten, um die ersten Metadaten zu ersetzen.

6. Betriebssystem-Aktualisierungsverfahren nach einem der Ansprüche 1 bis 5, wobei das Schreiben (S105) der zweiten Daten in die erste Partition spezifisch Folgendes umfasst:
Schreiben der zweiten Daten in die zweite Partition in der Form einer Copy-on-Write-Datei, COW-Datei, um dritte Daten zu erhalten; und
Schreiben der dritten Daten in die erste Partition.

7. Betriebssystem-Aktualisierungsverfahren nach einem der Ansprüche 1 bis 6, wobei das Verfahren vor dem Schreiben (S105) der zweiten Daten in die erste Partition ferner Folgendes umfasst: Durchführen eines Neustartvorgangs und während des Neustarts Eintreten in einen Wiederherstellungsmodus für ein Zurücksetzen auf Werkseinstellungen; und das Schreiben der zweiten Daten in die erste Partition, das Schreiben der zweiten Metadaten zum Ersetzen der ersten Metadaten und das Schreiben der zweiten Partitionstabelle zum Ersetzen der ersten Partitionstabelle in dem Wiederherstellungsmodus implementiert werden.

8. Betriebssystem-Aktualisierungsverfahren nach einem der Ansprüche 1 bis 7, wobei die erste Partition eine dynamische Partition in einem Android-System ist; und die zweite Partition eine Benutzerdatenpartition in dem Android-System ist.

9. Betriebssystem-Aktualisierungsverfahren nach einem der Ansprüche 1 bis 8, wobei das erste Betriebssystem ein Vorführgeräte-Betriebssystem ist; und das zweite Betriebssystem ein kommerzielles Vorrichtungs-Betriebssystem ist.

10. Elektronische Vorrichtung (100), umfassend einen oder mehrere Prozessoren (110) und einen oder mehrere Speicher (121), wobei der eine oder die mehreren Speicher (121) mit dem einen oder den mehreren Prozessoren (110) gekoppelt sind, der eine oder die mehreren Speicher (121) dazu konfiguriert sind, Computerprogrammcode zu speichern, der Computerprogrammcode Computeranweisungen umfasst, und der eine oder die mehreren Prozessoren (110) dazu konfiguriert sind, bei Ausführen der Computeranweisungen das Betriebssystem-Aktualisierungsverfahren nach einem der Ansprüche 1 bis 9 durchzuführen.

11. Computerlesbares Speichermedium, umfassend Anweisungen, wobei die Anweisungen, wenn sie auf einer elektronischen Vorrichtung (100) ausgeführt werden, die elektronische Vorrichtung (100) veranlassen, das Betriebssystem-Aktualisierungsverfahren nach einem der Ansprüche 1 bis 9 durchzuführen.

## Revendications

1. Procédé de mise à jour de système d'exploitation, appliqué à un dispositif électronique (100), dans lequel une mémoire du dispositif électronique (100) comprend une première partition et une deuxième partition, la première partition est configurée pour stocker des premières données d'un premier système d'exploitation installé sur le dispositif électronique (100), la deuxième partition est configurée pour stocker des données d'utilisateur, la mémoire comprend en outre une première table de partitions et des premières métadonnées, la première table de partitions est utilisée pour enregistrer des informations de partition d'une pluralité de partitions dans la mémoire, la pluralité de partitions comprennent la première partition et la deuxième partition, et les premières métadonnées sont utilisées pour stocker des informations de partition d'une ou de plusieurs sous-partitions dans la première partition ; et le procédé comprend :
l'obtention (S102) de données de mise à jour, dans lequel les données de mise à jour comprennent des deuxièmes données d'un deuxième système d'exploitation, des deuxièmes métadonnées, et une deuxième table de partitions, les deuxièmes données correspondent aux premières données, des informations de partition d'une ou de plusieurs sous-partitions dans la première partition correspondant aux deuxièmes données sont enregistrées dans les deuxièmes métadonnées, et des informations de partition d'une pluralité de partitions dans la mémoire correspondant au deuxième système d'exploitation sont enregistrées dans la deuxième table de partitions ;
l'écriture (S105) des deuxièmes données dans la première partition ;
l'écriture (S105) des deuxièmes métadonnées pour remplacer les premières métadonnées ;
l'écriture (S105) de la deuxième table de partitions pour remplacer la première table de partitions ; et
la détermination, dans lequel
lorsque, pour une sous-partition des une ou plusieurs sous-partitions, une taille réelle d'espace de stockage requise pour les données de mise à jour est inférieure à une taille de la sous-partition des une ou plusieurs sous-partitions, la taille de la sous-partition est réduite (S110 ; S201 ; S301) par l'ajustement de la taille sur la base de la taille réelle pour libérer de l'espace de stockage disponible, de sorte qu'une taille de la première partition enregistrée dans la deuxième table de partitions est inférieure à la taille de la première partition enregistrée dans la première table de partitions, une taille de la deuxième partition enregistrée dans la deuxième table de partitions est supérieure à la taille de la deuxième partition enregistrée dans la première table de partitions, et après l'écriture (S105) de la deuxième table de partitions pour remplacer la première table de partitions, la taille de la première partition de la mémoire a été réduite, et la taille de la deuxième partition a été augmentée.

2. Procédé de mise à jour de système d'exploitation selon la revendication 1, dans lequel l'écriture (S105) des deuxièmes métadonnées pour remplacer les premières métadonnées comprend spécifiquement : après l'écriture (S302), dans la deuxième partition, des deuxièmes données stockées dans la première partition, l'écriture des deuxièmes métadonnées pour remplacer les premières métadonnées ; et après que les premières métadonnées sont remplacées, l'écriture en retour (S304), dans la première partition, des deuxièmes données mises en mémoire tampon dans la deuxième partition ; et
l'écriture de la deuxième table de partitions pour remplacer la première table de partitions comprend spécifiquement :
après que les deuxièmes données mises en mémoire tampon dans la deuxième partition sont écrites en retour dans la première partition, l'écriture de la deuxième table de partitions pour remplacer la première table de partitions.

3. Procédé de mise à jour de système d'exploitation selon la revendication 2, dans lequel l'écriture des deuxièmes données dans la première partition comprend spécifiquement : l'écriture de premières données de sous-partition dans les deuxièmes données dans une première sous-partition dans la première partition, dans lequel la première sous-partition est une sous-partition qui se trouve dans la première partition et qui comprend une pluralité de blocs de stockage non contigus, et les premières données de sous-partition sont stockées dans la pluralité de blocs de stockage non contigus ; et
l'écriture, dans la deuxième partition, des deuxièmes données stockées dans la première partition comprend spécifiquement :
l'écriture des premières données de sous-partition, stockées dans un premier bloc de stockage, dans un troisième bloc de stockage de la deuxième partition ; et l'écriture des premières données de sous-partition, stockées dans un deuxième bloc de stockage, dans un quatrième bloc de stockage de la deuxième partition, dans lequel
le premier bloc de stockage et le deuxième bloc de stockage sont deux blocs de stockage non contigus dans la première sous-partition, et le troisième bloc de stockage et le quatrième bloc de stockage sont deux blocs de stockage contigus dans la deuxième partition.

4. Procédé de mise à jour de système d'exploitation selon la revendication 2 ou 3, dans lequel l'écriture (S302), dans la deuxième partition, des deuxièmes données stockées dans la première partition comprend spécifiquement : l'écriture des deuxièmes données, stockées dans la première partition, dans une première zone de la deuxième partition, dans lequel la première zone se trouve à la fin de la deuxième partition.

5. Procédé de mise à jour de système d'exploitation selon la revendication 1, dans lequel l'écriture des deuxièmes métadonnées pour remplacer les premières métadonnées comprend spécifiquement :
le déplacement (S202) de données dans une deuxième sous-partition dans la première partition depuis une deuxième zone de la première partition vers une troisième zone, dans lequel la deuxième sous-partition est une sous-partition après une troisième sous-partition, et la troisième sous-partition est la sous-partition dont la taille est réduite (S201) après que les deuxièmes données sont écrites dans la première partition ; et
après que les données ont été déplacées vers l'avant, l'écriture des deuxièmes métadonnées pour remplacer les premières métadonnées.

6. Procédé de mise à jour de système d'exploitation selon l'une quelconque des revendications 1 à 5, dans lequel l'écriture (S105) des deuxièmes données dans la première partition comprend spécifiquement :
l'écriture des deuxièmes données dans la deuxième partition sous la forme d'un fichier de copie sur écriture, COW, pour obtenir des troisièmes données ; et
l'écriture des troisièmes données dans la première partition.

7. Procédé de mise à jour de système d'exploitation selon l'une quelconque des revendications 1 à 6, dans lequel avant l'écriture (S105) des deuxièmes données dans la première partition, le procédé comprend en outre : l'exécution d'une opération de redémarrage et, pendant le redémarrage, l'entrée dans un mode de récupération pour une réinitialisation d'usine ; et l'écriture des deuxièmes données dans la première partition, l'écriture des deuxièmes métadonnées pour remplacer les premières métadonnées, et l'écriture de la deuxième table de partitions pour remplacer la première table de partitions sont mises en œuvre dans le mode de récupération.

8. Procédé de mise à jour de système d'exploitation selon l'une quelconque des revendications 1 à 7, dans lequel la première partition est une partition dynamique dans un système Android ; et la deuxième partition est une partition de données d'utilisateur dans le système Android.

9. Procédé de mise à jour de système d'exploitation selon l'une quelconque des revendications 1 à 8, dans lequel le premier système d'exploitation est un système d'exploitation de dispositif de démonstration ; et le deuxième système d'exploitation est un système d'exploitation de dispositif commercial.

10. Dispositif électronique (100), comprenant un ou plusieurs processeurs (110) et une ou plusieurs mémoires (121), dans lequel les une ou plusieurs mémoires (121) sont couplées aux un ou plusieurs processeurs (110), les une ou plusieurs mémoires (121) sont configurées pour stocker un code de programme informatique, le code de programme informatique comprend des instructions informatiques, et les un ou plusieurs processeurs (110) sont configurés pour réaliser, lors de l'exécution des instructions informatiques, le procédé de mise à jour de système d'exploitation selon l'une quelconque des revendications 1 à 9.

11. Support de stockage lisible par ordinateur, comprenant des instructions, dans lequel les instructions, lorsqu'elles sont exécutées sur un dispositif électronique (100), amènent le dispositif électronique (100) à réaliser le procédé de mise à jour de système d'exploitation selon l'une quelconque des revendications 1 à 9.
